# EUROPEAN PATENT SPECIFICATION

(11) **EP 3 296 428 B1**
(45) Date of publication and mention of the grant of the patent: **15.05.2019**
(21) Application number: 16189278.1
(22) Date of filing: 16.09.2016
(51) Int. Cl.: C23C 18/12, C23C 18/16, C23C 18/18, C23C 28/00

(54) **METHOD FOR DEPOSITING A METAL OR METAL ALLOY ON A SURFACE**
VERFAHREN ZUR ABSCHEIDUNG EINES METALLS ODER EINER METALLISCHEN LEGIERUNG AUF EINER OBERFLÄCHE
PROCÉDÉ PERMETTANT DE DÉPOSER UN MÉTAL OU UN ALLIAGE MÉTALLIQUE SUR UNE SURFACE

(43) Date of publication of application: 21.03.2018
(73) Proprietor: Atotech Deutschland GmbH, 10553 Berlin (DE)
(72) Inventor: Bernhard, Tobias, 10553 Berlin (DE); Peter, Anna, 10553 Berlin (DE); Merschky, Michael, 10553 Berlin (DE); Brüning, Frank, 10553 Berlin (DE); Bilkay, Taybet, 10553 Berlin (DE); Brunner, Heiko, 10553 Berlin (DE)

(56) References cited:
- US-A- 5 120 339
- US-A- 5 645 930
- US-A- 5 693 209

## Description

### Field of the Invention

This invention relates to a method for providing a multilayer coating on a surface of a substrate. The invention further relates to a multilayer system and the use of such a multilayer system, which has been provided by such a method, for achieving a high coverage of the metal or metal alloy of the third coating layer on the underlying second coating layer of the multilayer system.

### Background of the Invention

Various methods to metallise substrates are known in the art. Conductive substrates can be directly coated with a metal by various wet chemical plating processes, e.g. electroplating or electroless plating. Such methods are well established in the art. Usually, a cleaning pretreatment is applied to the substrate surface before the wet chemical plating process is applied to ensure a reliable plating result.

Various methods are known to deposit a metal onto non-conductive surfaces. In wet chemical methods, the surfaces to be metallised are, after an appropriate preliminary treatment, firstly activated and then metallised in an electroless manner and thereafter, if necessary, metallised electrolytically. With the introduction of more advanced technologies, hitherto used organic substrates are less suitable because of their relatively poor dimensional stability and coplanarity, which limits them in terms of Input / Output (I/O) pitch. Inorganic interposers made of silicon or glass allow for straightforward matching of the Coefficient of Thermal Expansion of the interposer to the Silicon Chip. Silicon has a mature manufacturing base but suffers from some disadvantages when compared to glass. In particular, glass has inherently superior electrical properties compared to silicon and offers the possibility to use larger area panel sizes, which results in significant cost savings versus a silicon wafer based platform. A reliable plating technology for good adhesion of metals, in particular of copper, to glass is a critical prerequisite for the use of glass substrates in the electronic packaging market.

This is a challenge however, as metallisation of a very smooth glass with a surface roughness of <10 nm is significantly more challenging than plating on an organic substrate. Methods that depend solely on mechanical anchoring from substrate roughening were tested for adhesion performance. However, this requires strong roughening of the substrate surface, which negatively influences the functionality of the metallised surface, e.g. in printed electronic circuits or Radio Frequency Identification (RFID) antennas.

Wet-chemically etching with either hydrofluoric acid containing media or hot alkaline metal hydroxide containing media can be employed for both cleaning and roughening of the non-conductive substrates, particularly glass or ceramic type substrates. Adhesion is then provided by additional anchoring sites of the roughened surface. Alternatively, conductive polymers can be formed on the non-conductive surface to provide a first conductive layer for subsequent metal plating of the surface.

EP 2 602 357 A1 relates to a method for metallisation of substrates providing a high adhesion of the deposited metal to the substrate material and thereby forming a durable bond. The method applies novel adhesion promoting agents comprising nanometre-sized oxide particles prior to metallisation. The particles are selected from one or more of silica, alumina, titania, zirconia, tin oxide and zinc oxide particles, which have at least one attachment group bearing a functional chemical group suitable for binding to the substrate. These nanometre-sized particles are attached to the substrate and remain chemically unchanged before a subsequent metal plated layer is attached to the substrate surface.

WO 2015/044091 concerns an essentially wet-chemical process for the metallisation of glass and ceramics comprising the steps of a) depositing on at least one portion of the non-conductive substrate surface a layer of a metal oxide compound selected from the group consisting of zinc oxides, titanium oxides, zirconium oxides, aluminium oxides, silicon oxides, and tin oxides or mixtures of the aforementioned; and thereafter b) heating the non-conductive substrate and thereby forming an adhesive layer of the metal oxide compound on at least one portion of the substrate surface; and thereafter c) metal plating at least the substrate surface bearing the adhesive layer of the metal oxide compound by applying a wet-chemical plating method and thereafter; d) heating the metal plated layer to a maximum temperature of between 150 and 500°C.

US5120339 discloses a method of preparing a multilayer comprising the steps of depositing a metal oxide precursor on the surface of a glass substrate and heat-treating the substrate to obtain a metal oxide; treating the surface of the substrate with a cyanate polymer; and metallizing the treated glass substrate by activation and electroless deposition.

Many (wet-chemical) metallisation processes require alkaline media to be employed. Unfavourably, many metal oxides useable in such processes are susceptible to alkaline degradation which then results in poor adhesion strength. This is even more pronounced, as the metal deposition initiation is often poor. Metal deposition initiation in this context is to be understood as the coverage of substrates with metal or metal alloy within the first stages of the treatment with a (typically alkaline) wet-chemical plating bath. An insufficient metal deposition initiation requires longer treatment times, thus exposing the metal oxide on the substrate for a prolonged time to the (typically alkaline) wet-chemical plating bath resulting in above-described detrimental effects. This also requires strict control of manufacturing processes, lengthy optimizations thereof and is prone to an increased scrap production.

Due to the ongoing miniaturization aiming at smaller components with thinner layers, this issue becomes even more demanding. The methods known in the art therefore suffer from poor coverages of the substrates with metals or metal alloys. Importantly, coverage of a surface of a substrate with the metal is often incomplete and adhesion of the metal to the underlying substrate typically remains insufficient.

Also, the problem of large CTE (coefficient of thermal expansion) mismatch between glass (CTE = 3-8 ppm) and subsequently deposited metal, typically copper (CTE = about 16 ppm) needs to be addressed, otherwise leading to delamination from the bare glass.

### Objective of the present Invention

It is therefore the objective of the present invention to overcome the shortcomings of the prior art.

It is a further objective of the present invention to provide a method which reliably and quickly gives high coverages of a metal or metal alloy on the surface of the underlying layer, in particular on the surface of a metal oxide layer. Moreover, the method allows for homogeneous coverages of said surface, in particular of the surface of a metal oxide.

It is yet another objective of the present invention to provide a method which allows for an improved accelerated metal or metal alloy deposition initiation, especially within the first 30 seconds during the metal or metal alloy deposition.

### Summary of the Invention

Above-named objectives are solved by a method for providing a multilayer coating on a surface of a substrate comprising the following method steps
(i) providing the substrate;
(ii) depositing at least one metal oxide precursor onto the surface of the substrate;
(iii) heat-treating the surface of the substrate such that a metal oxide is formed thereon;
(iv) treating the surface of the substrate with a treatment solution comprising at least one nitrogen containing polymeric treatment additive according to claim 1;
(v) treating the surface of the substrate with an activation solution; and
(vi) treating the surface of the substrate with a metallising solution such that a metal or metal alloy is deposited thereon.

The steps of the method are carried out in the given order, but not necessarily in immediate order. Optional steps may be included in the method in between the steps described above.

The expression "treating the surface of the substrate" means in the context of the present invention said surface obtained from the preceding step (independently if this step has been an optional step or an essential step) of the inventive method.

The expression "polymeric" means in the context of the present invention a polymeric chemical structure, wherein the repeating unit is comprised at least two times (and thus includes those compounds occasionally designated as "oligomers"). Such a "short" chain length of the polymeric compound is named in the context of the invention "polymeric", even if the scientific worldwide community still discusses until today about a sharp borderline between the expressions "oligomers" and "polymers". Herein, each nitrogen containing polymeric treatment additive used in the context of the invention comprises at least two times the respective repeating unit and is named herein as "polymeric". The expression "multilayer coating" means in the context of the present invention that on the surface of a substrate several different layers of different chemical compositions are deposited. Preferably, the different layers are stacked-like arranged on the top of the surface of the substrate. In this context, the coverage of the respective upper surface of the respective underlying layer or substrate surface by the subsequently above-deposited next layer is preferably at least 50%, more preferably at least 75 %, and even more preferably at least 90 %. Ideally, and most preferred, a full coverage of 100 % is desired.

In another alternative embodiment, it is preferred that a layer, which is deposited on the top of the surface of the respective underlying layer does not only cover said surface of the underlying layer, but also deposits material in channels, pores, micro cracks or other openings and/or defects being present in said underlying layer.

The objectives are further solved by a multilayer system and the use of such a multilayer system, which has been provided by such a method, for achieving a high coverage of the metal or metal alloy of the third coating layer on the underlying second coating layer of the multilayer system.

The method according to the invention advantageously allows for high adhesion of the metal or metal alloy to the surface of the respective underlying coating layer. In addition, the method according to the invention allows improving the coverages of a metal or metal alloy deposited in step (vi) on the underlying surface of a multilayer coating (see also Application Examples 1, 4 and 5). Further, the method enhances the metal or metal alloy deposition initiation in step (vi) of the inventive method. This reduces the necessary treatment time of the substrate in step (vi) and shortens the overall time required for the method, thus reducing cost and improving manufacturing throughput while avoiding scrap production. Due to the improved metal or metal alloy deposition initiation in step (vi), the metal or metal alloy is deposited more quickly on the respective underlying metal oxide of step (iii). This deposited metal or metal alloy then protects the metal oxide from alkaline induced degradation (*e.g*. during further metal plating). The inventive method also provides blister-free metal or metal alloy deposits. Above-described advantages for the inventive method also apply *mutatis mutandis* to the multilayer system and the use of such a multilayer system, which has been provided by such a method, for achieving a high coverage of the metal or metal alloy of the third coating layer on the underlying second coating layer of the multilayer system.

### Brief Description of the Figures

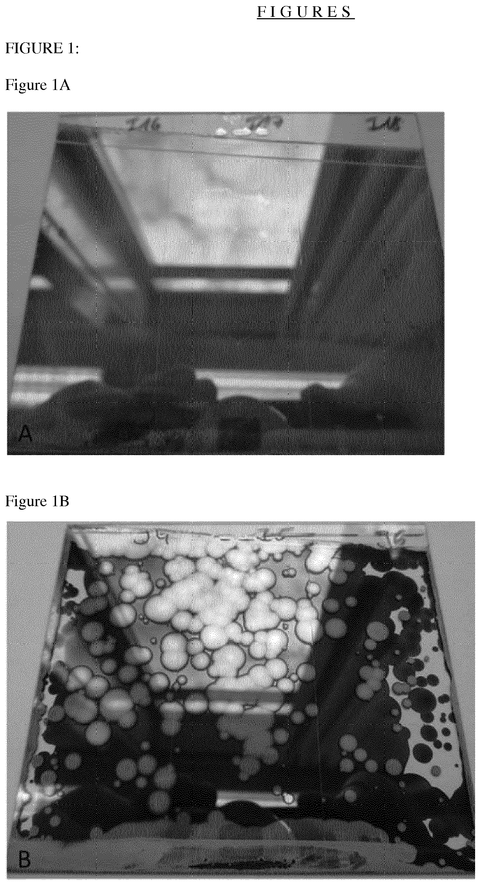

Figures 1A and 1B show two photos of glass substrates. The substrate depicted in Figure 1A was treated as described in Application Example 4 (inventive) and has a homogeneous and full coverage with copper. The substrate in Figure IB was obtained from Application Example 2 (comparative) and has an incomplete and inhomogeneous metal coverage of the surface.

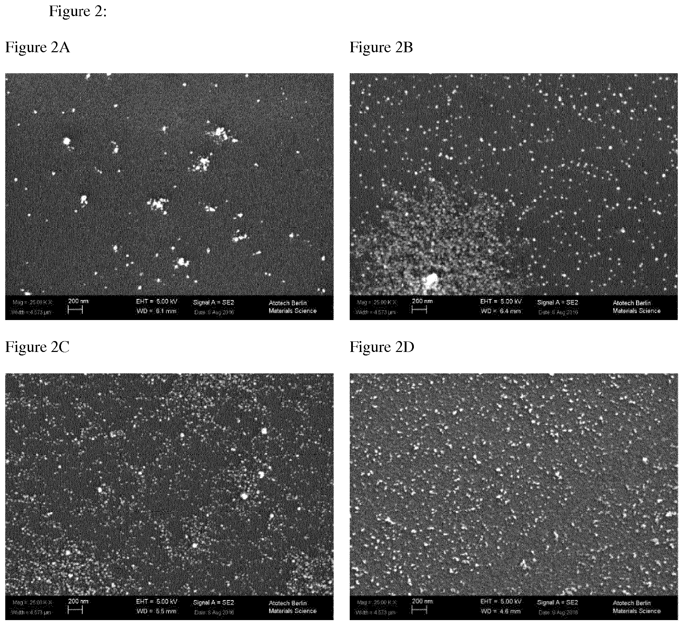

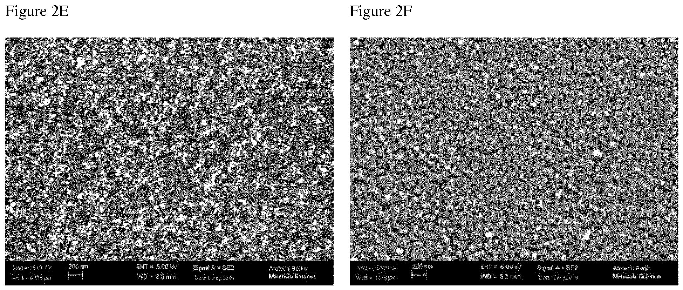

Figure 2 shows six individual SEM (scanning electron microscopy) pictures. Three (Figures 2A to 2C) relate to Application Example 2 (comparative) and the other three pictures (Figures 2D to 2F) relate to Application Example 4 (inventive). The pictures of comparative Application Example 2 show significantly less covered surfaces of the substrate after 10 s (Figures 2A and 2D), 20 s (Figures 2B and 2E) and 30 s (Figures 2C and 2F), respectively compared to the pictures of inventive Application Example 4.

### Detailed Description of the Invention

Percentages throughout this specification are weight-percentages (wt.-%) unless stated otherwise. Yields are given as percentage of the theoretical yield. Coverages of substrates are given as proportion of the entire surface. Concentrations given in this specification refer to the volume or mass of the entire solutions unless stated otherwise.

The term "alkyl group" according to the present invention comprises branched or unbranched alkyl groups comprising cyclic and/or non-cyclic structural elements, wherein cyclic structural elements of the alkyl groups naturally require at least three carbon atoms. C1-CX-alkyl group in this specification and in the claims refers to alkyl groups having 1 to X carbon atoms (X being an integer). C1-C8-alkyl group for example includes, among others, methyl, ethyl, *n*-propyl, *iso*-propyl, *n*-butyl, *iso*-butyl, *sec*-butyl, *tert*-butyl, *n*-pentyl, *iso*-pentyl, *sec*-pentyl, *tert*-pentyl, *neo*-pentyl, hexyl, heptyl and octyl. Substituted alkyl groups may theoretically be obtained by replacing at least one hydrogen by a functional group. Unless stated otherwise, alkyl groups are preferably selected from substituted or unsubstituted C1-C8 alkyl groups, more preferably from substituted or unsubstituted C1-C4 alkyl groups because of their improved water-solubility.

The term "alkylene group" according to the invention refers to branched or unbranched alkylene groups comprising cyclic and/or non-cyclic structural elements, wherein cyclic structural elements of the alkylene groups naturally require at least three carbon atoms. C1-CX-alkylene group in this specification and in the claims refers to alkylene groups having 1 to X carbon atoms (X being an integer). C1-C4-alkylene group for example includes, among others, methane-1,1-diyl (methylene), ethane-1,1-diyl, ethane-1,2-diyl (ethylene), propane- 1,3-diyl (propylene), propane-1,2-diyl, propane-1,1-diyl, butane-1,4-diyl (butylene), butane-1,1-diyl, butane-1,2-diyl, butane-1,3-diyl, and butane-2,3-diyl. Substituted alkylene groups may theoretically be obtained by replacing at least one hydrogen by a functional group. Unless stated otherwise, alkylene groups are preferably selected from substituted or unsubstituted C1-C8 alkylene groups, more preferably from substituted or unsubstituted C1-C4 alkylene groups because of their improved water-solubility.

In so far as the term "aryl group" is used in this description and in the claims, it refers to ring-shaped aromatic hydrocarbon residues, for example phenyl or naphtyl where individual ring carbon atoms can be replaced by N, O and/or S, for example benzothiazolyl. Furthermore, aryl groups are optionally substituted by replacing a hydrogen atom in each case by a functional group. The term C1-CX-aryl group refers to aryl groups having 1 to X carbon atoms (optionally replaced by N, O and/or S) in the ring-shaped aromatic group.

In so far as the term "arylene group" is used in this description and in the claims, it refers to divalent ring-shaped aromatic hydrocarbon residues, for example phenylene or naphtylene where individual ring carbon atoms can be replaced by N, O and/or S, for example benzothiazolylene. Furthermore, arylene groups are optionally substituted by replacing a hydrogen atom in each case by a functional group. The term C1-CX-arylene group refers to aryl groups having 1 to X carbon atoms (optionally replaced by N, O and/or S) in the ring-shaped aromatic group.

In so far as the term "alkaryl group" is used in this description and in the claims; it refers to a hydrocarbon residue consisting of at least one alkyl group and at least one aryl group such as benzyl and tolyl. The terms "alkaryl group" and "aralkyl group" are used interchangeably herein. Similarly, "alkarylene groups" are divalent residues comprising at least one alkyl group and at least one aryl group. The terms "alkarylene group" and "aralkylene group" are used interchangeably herein.

Unless stated otherwise, alkyl groups, aryl groups, aralkyl groups, alkylene groups, arylene groups, aralkylene group groups are substituted or unsubstituted. Functional groups as substituents are preferably selected from the group consisting of hydroxyl, amino and carboxyl to improve the water-solubility of the treatment additives. If more than one residue is to be selected from a certain group, each of the residues is selected independently from each other unless stated otherwise hereinafter. The term "metal deposition initiation" shall not be understood to exclude metal alloys.

### Substrates

In step (i) of the inventive method, the substrate is provided. The substrate is preferably selected from the group consisting of glass substrates, ceramic substrates, silicon substrates and combinations thereof. More preferably, the substrate is a glass substrate for the reasons outlined above. Glass is preferably selected from silica glass (amorphous silicon dioxide materials), soda-lime glass, float glass, fluoride glass (also referred to as fluorinated glass), aluminosilicates, phosphate glass, borate glass, quartz glass, borosilicate glass, chalcogenide glass, glass-ceramic materials, and aluminium oxide. Smooth glass with a surface roughness of less than 50 nm is preferred. Ceramics are preferably selected from technical ceramics like oxide based ceramics such as aluminium oxide, beryllium oxide, magnesium oxide, cerium oxides, yttrium oxides, titanium oxide, zirconium oxide, aluminium titanium oxide, barium titanium oxide; non-oxide based ceramics like carbides such as silicon carbide, borides, nitrides such as boron nitride, aluminium nitride as well as silicides; mixed oxide/non-oxide ceramics such as silicon oxide nitride, silicon aluminium oxide nitride and mixtures of these compounds.

Silicon is preferably selected from the group consisting of polysilicon (including doped polysilicon such as p-doped polysilicon and n-doped polysilicon), monocrystalline silicon, silicon oxide, silicon nitride and silicon oxynitride. In so far surfaces are to be treated, it is also possible within the means of the present invention, to treat only one or more portions of a given surface or various portions of a given surface. In order to improve the legibility, the terms "at least one portion of the surface of the substrate" are shortened to refer only to the surface of the substrate.

The substrates are made in their entirety of any of the listed materials or combinations thereof or they only comprise at least one surface made of one or more of the materials listed (above).

In a further embodiment, the inventive method further comprises an optional pretreatment step (i.i) for the surface of the substrate, wherein step (i.i) is carried out between steps (i) and (ii). Step (i.i) is referred to herein as "pretreatment step". Suitable known pretreatment steps are exemplarily cleaning, etching or reducing steps. Cleaning, etching, reducing or rinsing steps can be additionally included between all method steps (i) to (vi) of the inventive method.

### Step (ii): Deposition of the at least one metal oxide compound

The at least one metal oxide compound is a metal oxide precursor. The at least one metal oxide precursor is suitable to form a metal oxide in subsequent step (iii) (e.g. in an oxygen containing atmosphere). The at least one metal oxide precursor is selected from the group consisting of zinc oxide precursors, titanium oxide precursors, zirconium oxide precursors, aluminium oxide precursors, silicon oxide precursors and tin oxide precursors or mixtures of the aforementioned.

Preferable metal oxide precursors are soluble salts of the respective metal. Preferably, the at least one metal oxide precursor is selected from organic metal salts of the respective metals such as alkoxylates (e.g. methoxylate, ethoxylate, propoxylate and butoxylate), organic acid salts such as acetates, alkylsulphonates (*e.g*. methane sulphonate), organic metal complexes such as acetylacetonates and inorganic metal salts such as nitrates, sulphates, carbonates, hydroxides, oxohydroxides, halides such as chlorides, bromides and iodides.

Zinc oxide precursors are preferably selected from zinc acetate, zinc nitrate, zinc chloride, zinc bromide, and zinc iodide. Titanium oxide precursors are preferably selected from titanium tetraalkoxylates such as titanium tetraethoxylate and titanium tetrapropoxylate. Zirconium oxide precursors are preferably selected from zirconium alkoxylates and zirconia alkoxylates. Aluminium oxide precursors are preferably selected from aluminium acetate, aluminium nitrate, aluminium chloride, aluminium bromide, aluminium iodide and aluminium alkoxylates such as aluminium methoxylate, aluminium ethoxylate and aluminium propoxylate. Silicon oxide precursors are preferably selected from tetraalkoxysilicates such as tetramethoxysilicate and tetraethoxysilicate. Tin oxide precursors are preferably selected from stannous chloride, stannic chloride, stannous sulphate, stannic sulphate, tin pyrophosphate, stannous citrate, stannic citrate, stannous oxalate, stannic oxalate and tin alkylsulphonate such as tin methanesulphonate.

More preferably, at least one of the metal oxide precursors is a zinc oxide precursor. Even more preferably, all metal oxide precursors are zinc oxide precursors for its improved structuring behaviour in optional step (iv.i).

The metal oxide compounds differ from the nanometre-sized oxide particles according to EP 2 602 357 A1 by not being functionalized by having at least one attachment group bearing a functional chemical group suitable for binding to the substrate. This omission of attachment groups allows very simple and economically viable components to be used in the method according to the invention.

The at least one metal oxide compound is preferably deposited from a solution or from a dispersion containing the at least one metal oxide compound. For that reason, the at least one metal oxide compound is dissolved or dispersed in at least one solvent. In one embodiment of the present invention, the solution or dispersion containing the at least one metal oxide compound is preferably an aqueous solution or dispersion containing the at least one metal oxide compound. Optionally, the aqueous solution or dispersion containing the at least one metal oxide compound comprises water and a further solvent which is miscible with water such as alcohols, glycols or glycol ethers in order to improve the solubility of components dissolved or dispersed therein. Preferably, the aqueous solution or dispersion containing the at least one metal oxide compound comprises more than 90 wt.-% water based on all solvents present in the activation solution, more preferably more than 99 wt.-% water, due to its ecologically benign character.

The aqueous solution or dispersion containing the at least one metal oxide compound preferably has a pH value ranging from 1 to 9, more preferably from 2 to 7, even more preferably from 3 to 6. Other pH values outside said ranges may be employed in case instabilities of the aqueous solution or dispersion containing the at least one metal oxide compound occur.

In another embodiment of the present invention, the solution or dispersion containing the at least one metal oxide compound is an organic solvent-based solution or dispersion containing the at least one metal oxide compound. Preferable organic solvents are selected from alcohols, glycols and glycol ethers. Typically, such organic solvent-based solutions or dispersions containing the at least one metal oxide compound show an improved wetting behaviour compared to the aqueous counterparts described hereinbefore.

The concentration of the at least one metal oxide compound preferably ranges from 0.005 to 1.5 mol/L, more preferably from 0.01 to 1.0 mol/L, even more preferably from 0.02 to 0.75 mol/L.

The solution or dispersion containing the at least one metal oxide compound optionally comprises at least one surfactant. Said optional surfactant is preferably selected from anionic, cationic, non-ionic and amphoteric surfactants. Said optional surfactant facilitates the dissolving or dispersing of the at least one metal oxide precursor and improves the wetting of the surface of the substrate. The amount of the at least one surfactant ranges from 0.0001 to 5 weight percent, more preferably from 0.0005 to 3 weight percent of said solution or dispersion.

The solution or dispersion containing the at least one metal oxide compound optionally comprises at least one complexing agent suitable to prevent precipitation of the metal oxide compound. The at least one complexing agent suitable to prevent precipitation of the metal oxide compound advantageously increases the lifetime of the solution or dispersion. The at least one complexing agent is preferably selected from the group consisting of carboxylic acids (including aminocarboxylic acids and hydroxyl carboxylic acids), alkanolamines, alkylamines, acetylacetone and polyalcohols.

The at least one complexing agent is preferably comprised in the solution or dispersion in a molar ratio to the metal oxide compound of 4:1 to 0.25:1, more preferably 3:1 to 0.5:1, most preferably 1.5:1 to 0.75:1.

The solution or dispersion containing the at least one metal oxide compound is preferably applied to the surface of the substrate by dip-coating (immersion), spin-coating, spray-coating, SILAR (Successive Ionic Layer Adsorption and Reaction), LPD (Liquid Phase Deposition), curtain-coating, rolling, printing, screen printing, ink-jet printing and brushing. Such applications are known in the art and can be adapted to the method according to the present invention. Such applications result in a uniform film of defined thickness on the surface of the substrate. If dip-coated, an immersion speed of the substrate into the solution or dispersion containing the at least one metal oxide compound of 10 to 100 mm/min is advisable, preferably 20 to 70 mm/min to avoid inhomogeneous coatings and to achieve optimal process control. The same values preferably apply to the drag-out speed of the substrate from the solution or dispersion containing the at least one metal oxide compound.

The contacting time with the solution or dispersion containing the at least one metal oxide compound in step (ii) is between 10 seconds and 20 minutes, preferably between 20 seconds and 5 minutes and even more preferred between 30 seconds and 3 minutes.

The application temperature depends on the type of application used. For example, for dip, roller or spin coating methods the temperature of application typically ranges between 5 and 90 °C, preferably between 10 and 80 °C and even more preferred between 15 and 60 °C. The application can be performed once or several times. The number of such application steps varies and depends on the final layer thickness of the metal oxide desired after step (iii). Generally, one to three application steps are sufficient. It is recommended to at least partially dry the coating by removal of the solvent prior to application of the next layer. The suitable temperature depends on the solvent used and its boiling point as well as the layer thickness and can be chosen by the person skilled in the art by routine experiments. Generally, a temperature between 150 and 350 °C, preferably between 200 and 300 °C is sufficient. This drying or partial drying of the coating between individual application steps is advantageous as the formed film is stable against dissolution in the solvent of the metal oxide precursor solution.

It is preferred to keep the surrounding relative humidity during step (ii) equal to or below 40%, more preferably below 30%. The temperature of the solution or dispersion containing the at least one metal oxide compound during storage, (e.g. prior to use in a tank) should be equal or below 40 °C, more preferably equal or below 30 °C to avoid undesired decomposition of the solution or dispersion due to aggregation of the individual ingredients.

### Step (iii): Heating Step

In step (iii) of the inventive method, the surface of the substrate (preferably, the surface of the substrate obtained from step (ii)) is heat-treated such that the metal oxide is formed thereon by converting the metal oxide precursor deposited in step (ii) into the respective metal oxide.

In one embodiment, the formed metal oxide is selected from the group consisting of zinc oxide, titanium oxide, silicon oxide, zirconium oxide, aluminium oxide, tin oxide and mixtures thereof; preferably, selected from the group consisting of zinc oxide, titanium (IV) oxide, zirconium (IV) oxide, aluminium oxide, silicon oxide, tin (IV) oxide and mixtures thereof; and more preferably selected from the group consisting of zinc oxide and tin oxide. The heating step (iii) is sometimes also referred to as sintering. Sintering is the process of forming a solid, mechanically stable layer of material by heat without melting the material to the point of liquefaction. The heating step (iii) is performed at a temperature in the range from 350 to 1200 °C, more preferably from 350 to 800 °C and most preferably from 400 to 600 °C. Often, the metal oxide is in a crystalline state after completion of step (iii). For zinc oxide, the temperature in this heating step equals or exceeds 400 °C. This comparatively low temperature required for zinc oxide is another advantage of zinc oxide.

The treatment time preferably is 1 min to 180 min, more preferably 2 to 120 min and most preferably 5 to 90 min.

Optionally, the heat-treatment uses a temperature ramp. This temperature ramp is either linear or non-linear. A linear temperature ramp is to be understood as a continuous heating starting at lower temperature and rising the temperature steadily until the final temperature is reached. A non-linear temperature ramp includes varying temperature rising speeds (*i.e.* the change of temperature over time) and optionally includes times without temperature changes and thereby keeping the substrate at a constant temperature for a certain period of time. A non-linear temperature ramp optionally includes one or more linear temperature ramps. Regardless of the type of temperature ramp, it is optionally followed by a concluding heating cycle without any temperature change. The substrate is e.g. kept at 500 °C for 5 min to 1 h after the temperature ramp has been concluded.

Optionally, a non-linear temperature ramp includes several heating steps as described herein such as the optional drying step and the essential sintering step with temperature rises in between those steps.

This heating is performed in one or more individual heat-treatment cycles. Each heat-treatment cycle comprises above-outlined heat-treatment and a subsequent cooling phase wherein the substrate is kept at a temperature lower the temperature used in the heating step.

The thickness of the metal oxide is preferably at least 1 nm, more preferably at least 2 nm, even more preferably at least 4 nm. The thickness preferably is less than 500 nm, more preferably less than 100 nm, even more preferably less than 25 nm.

In a further embodiment, the inventive method further comprises an optional step (iii.i), which is performed between steps (iii) and (iv), and wherein the surface of the metal oxide layer is contacted with an aqueous acidic or alkaline solution.

This additional step advantageously increases the surface roughness by about 10 - 50 nm, but does not exceed 200 nm. The increased roughness is within a range to increase the adhesion of the metal or metal alloy layer deposited in step (vi) to the surface of the metal oxide without negatively affecting its functionality. Optional step (iii.i) improves the wettability for the treatment solution in step (iv) and removes undesired remnants from the preceding steps.

The contact time is to be optimized such that the metal oxide formed in step (iii) is not (substantially) damaged. The aqueous solution is kept while contact at a temperature ranging from 10 to 50 °C, preferably from 15 to 30 °C. Such temperature ranges also limit the potential damage to the metal oxide formed in step (iii).

### Step (iv): Treatment solution

In step (iv), the surface of the substrate (preferably, the surface of the substrate obtained from step (iii)), namely the metal oxide layer, is treated with a treatment solution comprising at least one nitrogen containing polymeric treatment additive according to claim 1.

In one embodiment, the treatment solution comprises as nitrogen containing polymeric treatment additive a treatment additive TA1, wherein said treatment additive TA1 comprises p units (the repeating units of the treatment additive TA1) independently from each other selected from the following formulae 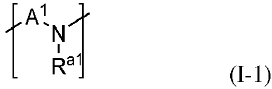 and 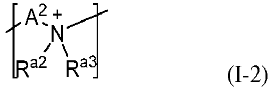
wherein each A¹ is independently from each other selected from substituted and unsubstituted C2-C4-alkylene group;
each A² is independently from each other selected from substituted and unsubstituted C2-C4-alkylene group;
each R^{a1} is independently from each other selected from the group consisting of hydrogen, alkyl group, aryl group, alkaryl group, and 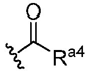 wherein each R^{a4} is independently from each other selected from the group consisting of alkyl group and aryl group or R^{a1} is a crosslinking moiety between two N of formula (1-1) or between one N of formula (1-1) and one N of formula (1-2);
each R^{a2} and R^{a3} are independently from each other selected from the group consisting of hydrogen, alkyl group, aryl group, alkaryl group or R^{a2} and/or R^{a3} are crosslinking moieties between two N of formula (1-2) or between one N of formula (1-1) and one N of formula (1-2);
p is an integer ranging from 3 to 22000.

If present in the treatment additive TA1, crosslinking moieties are selected independently from each other. If one or more of R^{a1}, R^{a2} and/or R^{a3} is selected to be a crosslinking moiety between two N of formula (1-1), between two N of formula (1-2) or between one N of formula (1-1) and one N of formula (1-2), they are independently from each other selected from the group consisting of alkylene group, α,ω-dicarbonylalkylene group, arylene group, dicarbonylarylene group and alkarylene group. Optionally, the treatment additive TA1 comprises at least one additional crosslinking moiety wherein said at least one additional crosslinking moiety is preferably represented by the following formula (1-3) 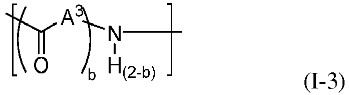 wherein each integer b is independently selected from 1 or 2 and each A³ is independently selected from alkylene, preferably from C1-C6-alkylene.

In a preferred embodiment thereof, the treatment additive TA1 comprises at least one R^{a1}, R^{a2} and/or R^{a3} as a crosslinking moiety between two N and wherein said R^{a1}, R^{a2} and/or R^{a3} is selected from the group consisting of alkylene group, α,ω-dicarbonylalkylene group, arylene group, dicarbonylarylene group and alkarylene group.

Such treatment additive TA1 surprisingly shows improved coverage of the metal oxide with metal or metal alloy deposited in step (vi) and an improved metal deposition initiation (see e.g. Application Example 5).

Preferably, p ranges from 3 to 10000, more preferably from 4 to 1000, even more preferably from 5 to 100, yet even more preferably from 10 to 50. Treatment additives TA1 within said ranges are typically well soluble in the treatment solution and adhere sufficiently to the surface of the substrate obtained from step (iii).

Preferably, each R¹ is independently from each other selected from the group consisting of hydrogen, alkyl group, aryl group, and alkaryl group or R^{a1} is a crosslinking moiety between two N of formula (1-1) or between one N of formula (1-1) and one N of formula (1-2); more preferably from hydrogen, C1-C4-alkyl group and benzyl or R^{a1} is a crosslinking moiety between two N of formula (1-1) or between one N of formula (1-1) and one N of formula (1-2), yet even more preferably from hydrogen, methyl and ethyl or R^{a1} is a crosslinking moiety between two N of formula (1-1) or between one N of formula (1-1) and one N of formula (1-2). This improves the water-solubility of such treatment additives TA1.

Preferably, each R^{a2} and R^{a3} are independently from each other selected from the group consisting of hydrogen, alkyl group, aryl group, alkaryl group or R^{a2} and/or R^{a3} are crosslinking moieties between two N of formula (1-2) or between one N of formula (1-1) and one N of formula (1-2); more preferably from hydrogen, C1-C4-alkyl group and benzyl or R^{a2} and/or R^{a3} are crosslinking moieties between two N of formula (1-2) or between one N of formula (1-1) and one N of formula (1-2), yet even more preferably from hydrogen, methyl and ethyl or R^{a2} and/or R^{a3} are crosslinking moieties between two N of formula (1-2) or between one N of formula (1-1) and one N of formula (1-2). If both R^{a2} and R^{a3} in any one unit according to following formula (1-2) are hydrogen, a pH induced deprotonation can result in the formation of the respective treatment additive TA1 comprising units according to following formula (1-1) and vice versa. Preferably, at least one of R^{a2} and R^{a3} is other than hydrogen.

Preferably, the treatment additive TA1 comprises one, two or more terminating groups for treatment additives TA1 selected from the group consisting of hydrogen, hydroxyl, alkyl group, aryl group, alkaryl group, amines and combinations of the aforementioned. Such terminating groups typically results from the synthesis of the treatment additives.

The treatment additive TA1 optionally further comprises at least one polyalkylene group, preferably represented by the following formula (1-4) 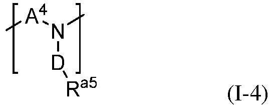 wherein R^{a5} is a C5-C1000-alkyl group; A⁴ is selected from the same group as above-defined group A¹ in formula (1-1) and D is selected from the group consisting of methylene, carbonyl (-C(O)-) an carboxyl (-C(O)-O-). Said polyalkylene group is preferably incorporated into the treatment additive between two units according to formulae (1-1) and/or (1-2) or it is incorporated as terminating group. The optional polyalkylene group improves the adsorption on the metal oxide formed in step (iii).

The individual units according to formulae (1-1), (1-2) and optionally (1-3) and/or (1-4) are preferably bound directly to each other. The individual units according to formulae (1-1) and/or (1-2) are optionally arranged randomly, in blocks or alternating. The treatment additive TA1 thus forms a random-polymer, a block-copolymer or an alternating polymer.

The treatment additive TA1 - if cationically charged - requires negatively charged counter ions. Said negatively charged counter ions are not particularly restricted and any negatively charged counter ion can be applied with the proviso that sufficient charges are present. Preferable negatively charged counter ions are halide ions such as fluoride, chloride, bromide and iodide, hydroxide, carbonate, nitrate, sulphate, alkylsulphonate such as methylsulphonate and mixtures of the aforementioned.

Preferably, the treatment additive TA1 consists of p units selected from the formulae (1-1) and/or (1-2) and one, two or more of above-defined terminating groups for treatment additives TA1, and optionally further comprises at least one additional crosslinking moiety, preferably represented by formula (1-3) and/or at least one polyalkylene group, preferably represented by the following formula (1-3); more preferably it consists of p units selected from the formulae (1-1) and/or (1-2) and two terminating groups for treatment additives TA1, and optionally further comprises at least one additional crosslinking moiety, preferably represented by formula (1-3) and/or at least one polyalkylene group, preferably represented by the following formula (1-4).

Treatment additives TA1 and suitable preparation methods therefor are known in the art. Some treatment additives TA1 are also commercially available. Treatment additives TA1 include *inter alia* polyoxazolines or homologues thereof such as polyoxazines (with optional removal of acyl groups typically formed during synthesis), polyalkylene imines or poly(amidoamines). The introduction of crosslinking moieties is well established in the art as well as the incorporation of polyalkylene groups.

Exemplarily, polyoxazolines (or homologues thereof including polyoxazines) are prepared by cationic ring-opening synthesis (see e.g. R. Hoogenboom, M. W. M. Fijten, M. A. R. Meier, U. S. Schubert, Macromolecular Rapid Communications, 2003, volume 24 (1), pages 92-97 and K. Aoi, M. Okada, Progess in Polymer Science, 1996, volume 21, pages 151-208, particularly sections 5 and 6 therein, pages 160-189), optionally followed by subsequent hydrolysis of the acyl group bound to the nitrogen atom (R. Hoogenboom et al., Macromolecules, 2010, volume 43, pages 927-933). It is further possible to introduce crosslinking moieties by reacting a polyoxazoline or homologues thereof with dicarboxylic acids (or the respective esters or diacyl halides), dihalidealkylenes, dipseudoalkylenes or the like. An alternative procedure includes the radical polymerization of vinyl amides.

In one embodiment, the treatment solution comprises as nitrogen containing polymeric treatment additive a treatment additive TA2, wherein said treatment additive TA2 comprises q units according to formula (II)

-[-D-E-]- (II)

wherein each D is independently from each other selected from the group consisting of
- 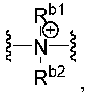
- 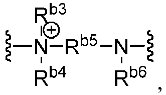
- 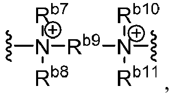 and
- substituted or unsubstituted heteroaryl groups comprising at least two nitrogen atoms;
wherein
each R^{b1}, R^{b2}, R^{b3}, R^{b4}, R^{b6}, R^{b7}, R^{b8}, R^{b10} and R^{b11} is independently from each other selected from the group consisting of hydrogen and alkyl group; each R^{b5} and R^{b9} is independently from each other selected from C1-C8-alkylene group;
each E is independently selected from the group consisting of
   - 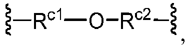
   - 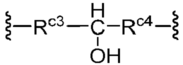 and
   - 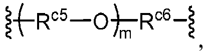
each R^{c1}, R^{c2}, R^{c3}, R^{c4} and R^{c6} is independently from each other selected from C1-C8-alkylene group;
each R^{c5} is independently from each other selected from C1-C8-alkylene group and alkarylene group;
m is an integer ranging from 2 to 100;
q is an integer ranging from 2 to 22000;

The units according to formula (II) are the repeating units of the treatment additive TA2. The two nitrogen atoms of the substituted or unsubstituted heteroaryl groups are comprised in a heteroaryl ring. Said heteroaryl groups are e.g. the respective derivatives of imidazole, pyrazole, triazoles, tetrazole, pyrimidine, pyrazine, pyridazine, triazines and tetrazines (having at least two bonding sites); preferably selected from the respective derivatives of imidazole, pyrazole, triazole, pyrimidine, pyrazine and pyridazine; more preferably selected from the respective derivatives of imidazole.

Preferably, q ranges from 2 to 50; more preferably from 2 to 20; and even more preferably from 3 to 15. These more narrow ranges advantageously result in improved solubility of such treatment additives TA2 in the treatment solution.

Preferably, the individual units according to formula (II) are bound directly to each other. This allows for a facilitated preparation of the respective treatment additives TA2.

Preferably, each R^{b1}, R^{b2}, R^{b3}, R^{b4}, R^{b7}, R^{b8}, R^{b10}, and R^{b11} is independently from each other selected from the group consisting of C1-C8-alkyl group, more preferably selected from the group consisting of C1-C6-alkyl group, even more preferably selected from the group consisting of C1-C4-alkyl group, yet even more preferably selected from the group consisting of methyl and ethyl.

Each R^{b6} is independently from each other selected from the group consisting of hydrogen and C1-C8-alkyl group, more preferably selected from the group consisting of hydrogen and C1-C6-alkyl group, even more preferably selected from the group consisting of hydrogen and C1-C4-alkyl group, yet even more preferably selected from the group consisting of hydrogen, methyl and ethyl.

Preferably, each R^{b5} and R^{b9} is independently from each other selected from C2-C6-alkylene group; more preferably from C2-C4-alkylene group, even more preferably from ethane-1,2-diyl (ethylene) and propane-1,3-diyl (propylene).

Preferably, each D is selected from 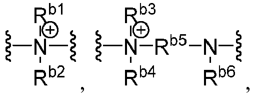 and heteroaryl groups comprising at least two nitrogen atoms; more preferably from 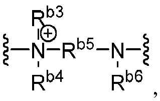 , and heteroaryl groups comprising at least two nitrogen atoms with above-defined preferences applying as well because these selections allow for an improved metal deposition initiations to be achieved.

Preferably, each E is selected from 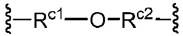 and 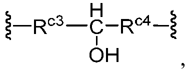 more preferably from 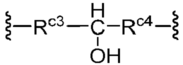 with above-defined preferences applying as well because these selections allow for an improved metal deposition initiations to be achieved.

Preferably, each R^{c1}, R^{c2}, R^{c3}, R^{c4}, and R^{c6} is independently from each other selected from C2-C6-alkylene group; more preferably from C2-C4-alkylene group, even more preferably from ethane-1,2-diyl (ethylene) and propane-1,3-diyl (propylene).

Preferably, each R^{c5} is independently from each other selected from C2-C6-alkylene group and alkarylene group; more preferably from C2-C4-alkylene group and 1-phenyl-1,2-ethandiyl, even more preferably from ethane-1,2-diyl (ethylene) and propane-1,3-diyl (propylene). The integer m preferably ranges from 2 to 50; more preferably from 2 to 20.

Optionally, the treatment additive TA2 comprises at least two terminating groups, which are preferably independently from each other selected from the group consisting of alkyl group, amino, alkylamino, dialkylamino, alkyleneamino, alkyleneiminoalkyl and alkyleneiminodialkyl.

The treatment additive TA2 - being positively charged - requires negatively charged counter ions. Preferable negatively charged counter ions are selected from the group defined for treatment additive TA1.

In one embodiment, the treatment solution comprises as nitrogen containing polymeric treatment additive a treatment additive TA3, wherein said treatment additive TA 3 comprises r units according to formula (III)

-[-V-W-]- (III)

wherein
each V is independently from each other selected to be 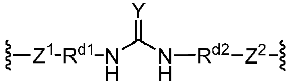 wherein
   each Y is independently from each other selected from the group consisting of N-H (a nitrogen atom bearing a hydrogen atom thus forming a guanidine moiety between R^{d1} and R^{d2}) and O (thus forming a urea moiety between R^{d1} and R^{d2});
   each R^{d1} and R^{d2} is selected independently from each other from C1-C8-alkylene group;
   each Z¹ and Z² is selected independently from each other from the group consisting of
      ▪ 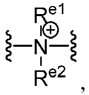
      ▪ substituted or unsubstituted heteroarylene groups comprising at least two nitrogen atoms, and
      ▪ substituted or unsubstituted heterocyclodiyl groups comprising at least two nitrogen atoms;
      with each R^{e1} and R^{e2} being independently from each other selected from the group consisting of hydrogen and alkyl group;
each W is independently from each other selected from the group consisting of
   - 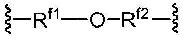
   - 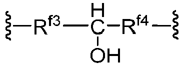 and
   - 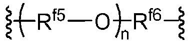
wherein
each R^{f1}, R^{f2}, R^{f3}, R^{f4} and R^{f6} is selected independently from each other from C1-C8-alkylene group;
each R^{f5} is independently from each other selected from C1-C8-alkylene group and alkarylene group;
n is an integer ranging from 2 to 100;
r is an integer ranging from 2 to 22000.

The units according to formula (III) are the repeating units of the treatment additive TA3. The substituted or unsubstituted heteroarylene group comprising at least two nitrogen atoms is a divalent heteroarene derivative, wherein the two nitrogen atoms are comprised in the ring-system of the heteroarylene group. The nitrogen atoms are independently from each other secondary, tertiary or quaternary. Said heteroarylene groups are typically selected from the respective derivatives of imidazole, pyrazole, triazole, tetrazole, pyrimidine, pyrazine, pyridazine, triazine and tetrazine; preferably selected from the respective derivatives of imidazole, pyrazole, pyrimidine, pyrazine and pyridazine; and more preferably selected to be imidazole.

The substituted or unsubstituted heterocyclodiyl group comprising at least two nitrogen atoms is a divalent derivative of a heterocyclyl moiety, wherein the two nitrogen atoms are comprised in the ring-system of the heterocyclodiyl group. Preferably, the substituted or unsubstituted heterocyclodiyl groups is selected from the group consisting of piperazine and imidazolidine derivatives, wherein piperazine is especially preferred because for the ease of synthesis.

The linkages between V and W preferably occur via quaternary ammonium groups, which are formed during addition of the precursors of W and V.

Preferably, each R^{d1} and R^{d2} is selected independently from each other from C2-C6-alkylene group; more preferably from C2-C4-alkylene group, even more preferably from ethane-1,2-diyl (ethylene) and propane-1,3-diyl (propylene).

Preferably, each R^{e1} and R^{e2} is independently from each other selected from the group consisting of hydrogen and C1-C8-alkyl group, more preferably selected from the group consisting of C1-C6-alkyl group, even more preferably selected from the group consisting of C1-C4-alkyl group, yet even more preferably selected from methyl and ethyl.

It is preferred that Y is selected to be N-H allowing for improved metal deposition initiation.

Preferably, each R^{f1}, R^{f2}, R^{f3}, R^{f4} and R^{f6} is selected independently from each other from C2-C6-alkylene group; more preferably from C2-C4-alkylene group, even more preferably from ethane-1,2-diyl (ethylene) and propane-1,3-diyl (propylene).

Preferably, each R^{f5} is independently from each other selected from C2-C6-alkylene group and alkarylene group; more preferably from C2-C4-alkylene group and 1-phenyl-1,2-ethandiyl, even more preferably from ethane-1,2-diyl (ethylene) and propane-1,3-diyl (propylene).

Preferably, each Z¹ and Z² is selected independently from each other from the group consisting of 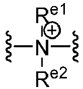 and substituted or unsubstituted heteroarylene groups comprising at least two nitrogen atoms allowing for improved metal deposition initiation. Preferably, each W is independently from each other selected from the group consisting of 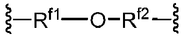 and 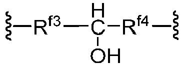 allowing for improved metal deposition initiation.

The integer n preferably ranges from 2 to 50, more preferably from 2 to 20. The integer r preferably ranges from 2 to 50, more preferably from 2 to 20.

The treatment additive TA3 - if being cationically charged - requires negatively charged counter ions, preferably selected from the group defined for treatment additive TA1. Optionally, the treatment additive TA3 comprises at least two terminating groups, which are preferably independently from each other selected from the group consisting of hydrogen, hydroxyl, alkyl group and amino.

In one embodiment for the ease of synthesis, all V in one treatment additive TA3 are selected to be the same. In another embodiment for the ease of synthesis, all W in one treatment additive TA3 are selected to be the same. In yet another embodiment for the ease of synthesis, all V are selected to be the same and all W in one treatment additive TA3 are selected to be the same.

In one embodiment, the treatment solution comprises as nitrogen containing polymeric treatment additive a mixture of treatment additives TA1 and TA2, TA1 and TA3, TA2 and TA3, or TA1 and TA2 and TA3.

The treatment solution is an aqueous solution. This means that the prevailing solvent is water. Other solvents which are miscible with water such as polar solvents including alcohols, glycols and glycol ethers are optionally added. For its ecologically benign characteristics, it is preferred to use water only (*i.e.* more than 99 wt.-% based on all solvents, more preferably more than 99.9 wt.-% based on all solvents).

In one embodiment, the total concentration of all treatment additives in the treatment solution in step (iv) ranges from 0.001 to 0.1 wt.-%, more preferably from 0.004 to 0.04 wt.-%. These concentrations allow high coverage of the respective surface with the metal or metal alloy deposited in step (vi). Concentrations below said thresholds are sometimes not high enough for the positive effects to take effect while higher concentration still provide good results but do not improve the effects any further and thus only add to the cost without additional benefits.

In one embodiment, the pH of the treatment solution in step (iv) ranges from 5 to 13, more preferably from 6 to 12, and most preferably from 7 to 11.

The treatment solution optionally comprises at least one surfactant selected from the group consisting of non-ionic surfactants, anionic surfactants, cationic surfactants and amphoteric surfactants. Said surfactants favourably increase the wetting of the surface improve the solubility of treatment additives if required. The at least one optional surfactant is preferably contained in the treatment solution in a total concentration of 0.0001 to 5 wt.-%, more preferably of 0.0005 to 3 wt.-%. Concentrations outside said ranges may be applied in dependence of the specific surfactant used.

The treatment solution is preferably prepared by dissolving (or dispersing) all components in water (and/or water-miscible organic solvents).

The treatment solution is preferably applied to the respective surface by dip-coating, spin-coating, spray-coating, curtain-coating, rolling, printing, screen printing, ink-jet printing or brushing.

The contacting time with the treatment solution is preferably ranging from 10 seconds to 20 minutes, more preferably from 30 seconds to 5 minutes and even more preferred from 1 minute to 3 minutes.

The application temperature depends on the method of application used. For example, for dip, roller or spin coating applications, the temperature of application typically ranges between 5 and 90 °C, preferably between 10 and 80 °C and even more preferred between 20 and 60 °C.

In one embodiment, the method further comprises an optional step (iv.i) for structuring the respective surface conducted between steps (iv) and (v). Alternatively, optional step (iv.i) is included after step (v) or (vi). Various methods to structure the surface of the substrate are described in the art. Such methods include the deposition of photomasks, solder masks or the partial removal of the metal oxide formed in step (iii). The structuring of the surface of the substrate allows for the formation of structured metal or metal alloy deposits on the respective surface in step (vi). Structured metal or metal alloy deposits are e.g. lines, trenches and pillars.

### Step (v): Activation step

In step (v), the surface of the substrate (preferably, the surface of the substrate obtained from step (iv)) is treated with the activation solution. The activation solution comprises at least one noble metal catalyst precursor. Step (v) is also referred to as "activation step" in the art. By carrying out step (v), the surface of the substrate is being activated. Methods for activation of substrates are known in the art.

Preferably, the at least one noble metal in the noble metal catalyst precursor is one or more selected from the group consisting of copper, silver, gold, ruthenium, rhodium, iridium, palladium, osmium, and platinum. More preferably, the noble metal is palladium for it is the most efficient in this context. The concentration of the noble metal ions in the activation solution depends *inter alia* on the chosen metal ion. The (total) concentration of the noble metal ions in the activation solution preferably ranges from 1 to 1000 mg/kg, more preferably from 10 to 500 mg/kg, even more preferably from 50 to 300 mg/kg to allow for sufficiently activated surfaces while not increasing the cost too much. Typically, noble metal catalysts are obtained from suitable noble metal catalyst precursors. Established noble metal catalyst precursors are either ionic noble metal compounds or colloids of the noble metal.

Ionic noble metal compounds are deposited from (typically aqueous) solutions onto the surface of the substrate and then reduced with suitable reducing agents (such as formaldehyde, alkali hypophosphite, dimethyl aminoboranes and the like) to form the noble metal catalyst. This is referred to as ionic activation in the art. Ionic noble metal compounds are typically water-soluble sources of noble metal ions such as water-soluble salts of the noble metals or water-soluble complexes of the noble metals.

The activation solution optionally comprises at least one complexing agent (sometimes referred to as chelating agent). This at least one complexing agent is suitable to prevent the precipitation of the noble metal ions present in the activation solution and may enhance the adsorption of said noble metal ions on the surface of the substrate. The person skilled in the art knows which complexing agents to choose for the given source of noble metal ions or useful complexing agents can be identified in routine experiments. Generally, useful complexing agents are carboxylic acids including dicarboxylic acids and homologues thereof such as malic acid, hydroxyl carboxylic acids such as citric acid and tartaric acid, amino carboxylic acids such as glycine or EDTA, phosphonates and amines including aliphatic amines such as ethylene diamine or nitrogen containing heterocycles like pyrrole, imidazole, pyridine, pyrimidine and carboxyl, hydroxy and amino derivatives of amines.

The activation solution optionally comprises at least one surfactant (also referred to as wetting agents in the art). The at least one surfactant is non-ionic, cationic, anionic or amphoteric. A useful surfactant is selected in dependence on the substrate to be treated and the noble metal ions present in the activation solution. Such a surfactant can be identified by routine experiments.

Colloids of noble metals mostly comprise a core of the noble metal which is to act as the noble metal catalyst and a protective shell, typically tin or organic protective shells such as polyvinyl alcohols or gelatine. This is referred to as colloidal activation. The colloids are deposited from (typically aqueous) solutions onto the surface of the substrate with subsequent removal of the protective shell. This removal of the protective shell is referred to as acceleration. This acceleration uses typically acidic aqueous solutions such as hydrochloric acid solutions.

Ionic activation is preferred in the context of the present invention because the required acceleration step in the case of the colloidal activation sometimes has detrimental effects on the metal oxide formed in step (iii) of the method according to the invention resulting in some cases in poor adhesion of the metal or metal alloy deposited in step (vi).

### Step (vi): Metallisation step

In step (vi), the surface of the substrate (preferably, the surface of the substrate obtained from step (v)) is treated with the metallising solution. By treating the surface of the substrate with a metallising solution, a metal or metal alloy is deposited thereon. Step (vi) is herein referred to as "metallisation step". The metallising solution in step (vi) is typically an electroless metallising solution. In the context of the present invention, electroless plating is to be understood as autocatalytic deposition with the aid of a (chemical) reducing agent (referred to as "reducing agent" herein).

A further form of metal deposition is immersion plating. Immersion plating is another deposition of metal without the assistance of an external supply of electrons and without chemical reducing agent. The mechanism relies on the substitution of metals from an underlying substrate for metal ions present in the immersion plating solution. In some cases, immersion and electroless plating occur simultaneously depending on the metal (alloy) to be deposited, the underlying substrate and the reducing agent in the solution. The terms "plating" and "deposition" are used interchangeably herein. The terms "plating bath" and "metallising solution" are also used interchangeably herein.

The main components of the electroless metallising solution are at least one source of metal ions, at least one at least one complexing agent, at least one reducing agent, and, as optional ingredients such as stabilising agents, grain refiners and pH adjustors (acids, bases, buffers).

The at least one source of metal ions in the electroless metallising solution is preferably selected from the group consisting of sources of copper ions, sources of nickel ions, sources of cobalt ions and mixtures thereof, more preferably sources of copper ions because of the high conductivity of copper deposits rendering copper or copper alloys particularly useful for the use in the electronic industry.

In one embodiment, the metal or metal alloy is deposited in step (v) by making use of an electroless metallising solution of copper, copper alloy, nickel, nickel alloy, cobalt, or cobalt alloy; preferably by making use of a electroless metallising solution of copper or copper alloy.

The electroless metallising solution is typically an aqueous solution. The term "aqueous solution" means in this case that the prevailing liquid medium, which is the solvent in the solution, is water. Further liquids, that are miscible with water, as for example alcohols and other polar organic liquids, that are miscible with water, are optionally added. Preferably, the electroless metallising solution comprises more than 90 wt.-% water based on all solvents present in the electroless metallising solution, more preferably more than 99 wt.-% water, due to its ecologically benign character. The electroless metallising solution may be prepared by dissolving all components in aqueous liquid medium, preferably in water.

If the metallising solution is to deposit a copper or copper alloy on the surface of the substrate, the electroless metallising solution comprises at least one source for copper ions. Such an electroless metallising solution for the deposition of copper or copper alloys will hereinafter be referred to as "electroless copper plating bath". Sources of copper ions are typically water-soluble copper salts and copper complexes. Preferable sources of copper ions are selected from the group consisting of copper sulphate, copper chloride, copper nitrate, copper acetate and copper methane sulphonate. An electroless copper plating bath comprises at least one source of copper ions (exemplarily selected from the group defined above), at least one reducing agent, at least one complexing agent, optionally one or more of enhancers, stabilising agents, accelerators (also referred to as exaltants in the art), surfactants (also referred to as wetting agents in the art), grain refining additives, acids, bases, buffers as pH adjustors. If a second source of reducible metal ions which is not a source of copper ions is present such as a source of nickel ions or a source of cobalt ions in the electroless copper plating bath, a copper alloy will be deposited. The electroless copper plating bath is preferably held at a temperature in the range of 20 to 60 °C, more preferably 30 to 55 °C and most preferably 33 to 40 °C during step (vi).

In one embodiment of the present invention, the at least one source of metal ions comprised in the electroless metallising solution is a source of nickel ions. Such an electroless metallising solution for the deposition of nickel and nickel alloys will henceforth be called "electroless nickel plating bath". Suitable sources of nickel ions are water-soluble nickel salts and nickel complexes. Preferred sources of nickel ions are selected from the group consisting of nickel chloride, nickel acetate, nickel methanesulphonate, nickel carbonate and nickel sulphate. An electroless nickel plating bath comprises at least one source of nickel ions, at least one reducing agent, at least one complexing agent, and optionally one or more of the following components such as stabilising agents, plating rate modifiers, surfactants, accelerators, brighteners, grain refining additives. The electroless nickel plating bath is preferably held at a temperature in the range of 25 to 100 °C, more preferably 35 to 95 °C and most preferably 70 to 90 °C during step (vi).

In one embodiment of the present invention, the at least one source of metal ions comprised in the electroless metallising solution is a source of cobalt ions. Such an electroless metallising solution will henceforth be called "electroless cobalt plating bath". The electroless cobalt plating bath comprises at least one source of cobalt ions. Suitable sources of cobalt ions are water-soluble cobalt salts and water-soluble cobalt complexes. Preferably, the source of cobalt ions is selected from the group consisting of cobalt acetate, cobalt sulphate, cobalt chloride, cobalt bromide and cobalt ammonium sulphate. The electroless cobalt plating bath is preferably held at a temperature in the range of 35 to 95 °C, more preferably 50 to 90 °C and most preferably 70 to 85 °C during step (vi).

The substrate is preferably treated with the electroless metallising solution for 0.5 to 30 min, more preferably 1 to 25 min and most preferably 2 to 20 min during step (vi).

Preferable metal or metal alloy layer thicknesses deposited in step (vi) of the method according to the invention range from 50 nm to 3000 nm, more preferable from 100 nm to 2000 nm, yet even more preferable from 200 nm to 1000 nm.

The substrate may be treated by any known means in the art with the electroless metallising solution. Typically, the surface of the substrate is contacted with the electroless metallising solution. The substrate may be entirely or partially immersed into the electroless metallising solution; the electroless metallising solution may also be sprayed or wiped thereon. By treating the surface of the substrate with the electroless metallising solution in step (vi), a metal or metal alloy deposit on the surface of the substrate obtained from step (v) is formed.

### Optional Step (vi.i): Internal Stress Relief Treatment

Optionally, the method according to the invention comprises a further step
(vi.i) Internal stress relief treatment.

Such an internal stress relief treatment of the substrate after electroless deposition of a metal or metal alloy in step (vi) advantageously reduces the (internal) stress in the metal or metal alloy and removes moisture therefrom by applying elevated temperatures (and is thus a further heat treatment step). Optional step (vi.i) is included in the inventive method after step (vi) and, preferably, before optional step (vii) if the latter-named is also part of the method. Alternatively, optional step (vi.i.) is included after optional step (vii). Typical internal stress relief treatment are carried out from 1 to 120 minutes, preferably from 5 to 90 minutes at a temperature ranging from 100 to 400 °C, preferably 100 to 300 °C.

Internal stress relief treatment can be performed by any means known in the art. Typically, the substrate is placed into an oven, is subjected to infrared radiation or the like.

### Optional Step (vii): Electrolytic deposition

The method according to the invention optionally comprises after step (vi) a further step (vii)
(vii) electrolytically depositing at least one metal or metal alloy onto the surface of the substrate obtained from step (vi).

Optional step (vii) is included in the inventive method after step (vi). If the inventive method encompasses optional step (vi.i), optional step (vii) is included before or after optional step (vi.i).

Electrolytic metallising solutions (also referred to as electrolytic plating baths) for various metals and metal alloys are known. Such electrolytic metallising solutions are referred to herein as "electrolytic metal or metal alloy plating baths". Preferably, the metal or metal alloy electrolytically deposited in step (vii) is selected from the group consisting of copper, nickel, cobalt, chromium, tin, gold, silver, alloys and mixtures of the aforementioned.

It is particularly preferred in the method according to the invention, that the same metal or an alloy thereof is deposited in step (vi) and in optional step (vii). This circumvents the problem of interdiffusion of the metals or metal alloys deposited in step (vi) and (vii) into each other during use of articles obtained from the method according to the invention.

More preferably, copper or a copper alloy is deposited in step (vi) and in optional step (vii). Even more preferably, pure copper is deposited in step (vi) and/or step (vii). Pure copper in the context of the present invention is to be understood as a copper deposit comprising 97 wt.-% of copper, preferably 98 wt.-% of copper, more preferably 99 wt.-% of copper. Such a high amount of copper in a formed deposit is particularly useful in the electronics industry where high amounts of copper are required because of the high electrical conductivity of such deposits.

The method according to the invention optionally comprises rinsing steps. Rinsing can be accomplished by treatment of the substrate with solvents, preferably water, more preferably deionised water (DI water). The method according to the invention optionally further comprises drying steps. Drying can be done by any means known in the art such as subjecting the substrate to elevated temperature or air drying.

Preferably, the solutions and dispersions in the method according to the invention are subject to (internal) movement. Such movement can be accomplished through stirring, pumping of the solution, air feeding into the solution, spray applications and the like. This guarantees homogeneous solutions which then allow for more homogeneous treatments of the surface of the substrate.

Unless stated otherwise hereinbefore or hereinafter, it is preferable that the substrate is entirely or partially immersed into the respective solutions or the solutions are preferably sprayed or wiped thereon.

The objective of the present invention is also solved by a multilayer system comprising a substrate, a first coating layer comprising at least one metal oxide, a second coating layer comprising at least one nitrogen containing polymeric treatment additive above the first coating layer, and a third coating layer comprising at least one metal or metal alloy above the second coating layer.

In a preferred embodiment thereto, the multilayer system comprises a glass substrate, a first coating layer comprising zinc oxide, a second coating layer comprising at least one nitrogen containing polymeric treatment additive above the first coating layer, and a third coating layer in form of electroless deposited copper above the second coating layer.

The layers are formed above each other, and optionally include further layers in between above-named layers. In one embodiment, the individual layers are formed (directly) on each other.

Further, the present invention relates to the use of such a multilayer system, which has been provided by a method as described above for achieving a high coverage of the metal or metal alloy of the third coating layer on the underlying second coating layer.

All details and explanations described above for the inventive method regarding the substrate, the first coating layer comprising at least one metal oxide, the second coating layer comprising at least one nitrogen containing polymeric treatment additive such as TA1, TA2, TA3 or mixtures thereof, and the third coating layer comprising at least one metal or metal alloy shall also be comprised and disclosed for the claimed multilayer system. It has not been cited again to avoid unnecessary repetition.

The following experiments are meant to illustrate the benefits of the present invention without limiting its scope.

### Examples

The following commercially available samples were used in the examples (all: 1.5 x 4.0 cm slides):
- Borosilicate Glass (Sₐ <10 nm), hereinafter referred to as "glass samples".

Products were used (concentrations, parameters, further additives) as described in the corresponding technical datasheets (as available at the date of filing) unless specified differently hereinafter.

Nuclear Magnetic Resonance: ¹H-NMR spectrums were recorded at 250 MHz with a spectrum offset of 4300 Hz, a sweep width of 9542 Hz at 25 °C (Bruker, NMR System 400). The solvent used was D₂O unless stated otherwise.

Molecular Mass: The weight average molecular mass MW of the polymers was determined by gel permeation chromatography (GPC) using a GPC apparatus from WGE-Dr. Bures equipped with a molecular weight analyser BI-MwA from Brookhaven, a TSK Oligo +3000 column, and Pullulan and PEG standards with MW = 200 to 22000 g/mol. The solvent used was Millipore water with 0.5 % acetic acid and 0.1 M Na2SO₄.

Surface roughness: The topography of surfaces was characterised by means of a white light interferometer (Atos GmbH). The image size for determination of surface roughness had an area of 60x60 µm. The surface roughness was calculated by NanoScope Analysis software. The values inferred from topography data are given to correspond to the average roughness, Sₐ. The surface roughness was measured in the centre of the sample where roughnesses are usually the most distinct.

Adhesion strength (peel strength): Adhesion of the metal or metal alloys deposited on a surface of a substrate was tested by attaching an adhesive tape (3M Type 898, with ∼5 N/cm on surfaces of galvanic plated Cu) to the metal or metal alloy deposit and peeling it off with medium movement (∼0.5 cm/s) at a 90° angle. If the adhesive tape can be removed without peeling off the metal or metal alloy, then the adhesion strength of the metal (alloy) layer exceeds 5 N/cm. If there is separation of the metal or metal alloy from the substrate, then the peel strength is below 5 N/cm.

Determination of thickness of the metal or metal alloy deposits: The deposit thickness was measured at 10 positions of each substrate and are used to determine the layer thickness by XRF using the XRF instrument Fischerscope XDV-SDD (Helmut Fischer GmbH, Germany). By assuming a layered structure of the deposit, the layer thickness can be calculated from such XRF data.

Coverage of the substrates: The coverage of substrates was measured with Stream Enterprise Desktop (VI.9, Olympus Corp.). After producing an image scan of the substrates, the coverage of the substrate was obtained based on the colour and contrast differences thereon.

Metal deposition initiation: The metal deposition initiation was obtained as coverage of the substrate after 30 s in step (vi) of the method according to the invention.

Scanning Electron Microscopy (SEM) were measured on a Zeiss Ultra Plus, SE2 detector, acceleration voltage 3.0 kV or 5.0 kV.

Synthetic Example 1: A 100 mL flask equipped with reflux condenser was with fed with nitrogen for 60 minutes at 70 °C to remove water and oxygen therefrom. Then, 30 g 2-ethyl-2-oxazolidine (300 mmol) was dissolved in 75 mL acetonitrile prior to the addition of 1.065 g methyl iodide (7.5 mmol). The colourless solution was stirred at 80 °C for 24 hours. Thereafter, 1.5 mL deionised water were added and the volatile components were removed under reduced pressure. 35.2 g of a yellow oily substance were obtained. The substance was dissolved in 35 mL acetone and poured into 400 mL diethyl ether. The supernatant solvent was removed by decantation.

The remaining oily substance was treated with 117 mL 6M hydrochloric acid and the mixture heated overnight under reflux. 150 mL deionised water were added resulting in an orange solution. Said solution was poured into 400 mL methanol followed by stirring for 5 minutes. After 30 minutes, a suspension was formed which was then filtered. The solid obtained was washed three times with 100 mL methanol each and dried in vacuo. 24.54 g of the desired product were obtained.

Synthetic example 1 is a treatment additive TA1 and comprised units according to formula (1-1) with A being ethylene, R^{a1} being hydrogen and p being 40 (in average, as determined by NMR). The terminating groups were methyl and hydroxyl.

Synthetic example 2: 10 g (135 mmol) diethylamine and 9.5 g (102 mmol) epichlorohydrine were dissolved in 29.2 g water. The solution was then held at 70 °C for 24 h. 48.7 g of an aqueous solution containing 40 wt.-% of the respective version of the treatment additive TA2 (MW = 200 Da) were obtained.

Synthetic example 3: 25 g (242 mmol) *N¹,N¹*-dimethylpropane-1,3-diamine and 16.4 g (176 mmol) epichlorohydrine were dissolved in 62.1 g water. The solution was then held at 70 °C for 17 h. 103.6 g of an aqueous solution containing 40 wt.-% of the respective other version of the treatment additive TA2 (MW = 1300 Da) were obtained.

Synthetic example 4: 20 g (194 mmol) *N¹,N¹*-dimethylpropane-1,3-diamine and 19.1 g (145 mmol) 1,3-dichloropropan-2-ol were dissolved in 58.7 g water. The solution was then held at 70 °C for 17 h. 97.8 g of an aqueous solution containing 40 wt.-% of the respective other version of the treatment additive TA2 (MW = 2000 Da) were obtained.

Synthetic example 5: 8 g (118 mmol) 1H-imidazole and 11.6 g (88 mmol) 1,3-dichloro-2-propanol were dissolved in 29.4 g water. The solution was then held at 80 °C for 20 h. 49 g of an aqueous solution containing 40 wt.-% of the respective other version of the treatment additive TA2 (MW = 200 Da) were obtained.

Synthetic example 6: 20 g (99 mmol) 1,3-bis(2-(dimethylamino)ethyl-urea and 9.8 g (74.1 mmol) 1,3-dichloro-2-propanol were dissolved in 44.6 g water. The solution was then held at 80 °C for 20 h. 74.4 g of an aqueous solution containing 40 wt.-% of the respective version of the treatment additive TA3 (MW = 1500 Da) were obtained.

Synthetic example 7: 20 g (72.4 mmol) 1,3-bis(3-(1*H*-imidazol-1-yl)propyl)urea and 7.1 g (54.3 mmol) 1,3-dichloro-2-propanol were dissolved in 40.7 g water. The solution was then held at 80 °C for 20 h. 67.9 g of an aqueous solution containing 40 wt.-% of the respective other version of the treatment additive TA3 (MW = 2000 Da) were obtained.

Synthetic example 8: 12 g (52.3 mmol) 1,3-bis(3-(dimethylamino)propyl)guanidine and 5.2 g (39.2 mmol) 1,3-dichloro-2-propanol were dissolved in 25.7 g water. The solution was then held at 80 °C for 20 h. 42.9 g of an aqueous solution containing 40 wt.-% of the respective other version of the treatment additive TA3 (MW = 700 Da) were obtained.

Synthetic example 9: 18 g (78 mmol) 1,3-bis(3-(dimethylamino)propyl)urea and 7.7 g (58.6 mmol) 1,3-dichloro-2-propanol were dissolved in 25.4 g water. The solution was then held at 80 °C for 24 h. 51.1 g of an aqueous solution containing 50 wt.-% of the respective other version of the treatment additive TA3 (MW = 3200 Da) were obtained.

### Application Example 1:

Step 1) A glass sample was treated with EXPT VitroCoat GI PreClean-1 (alkaline cleaner, product of Atotech Deutschland GmbH) under sonication (80W, 45kHz) at 50 °C for 5 min. Thereafter, the substrate was treated with an aqueous sulphuric acid solution (5%) at 50 °C for 5 min (equivalent to step (i.i) of the inventive method), rinsed in DI-water and dried with pressurized air

Step 2) The thus treated sample was vertically immersed into a solution of EXPT VitroCoat GI S-1 (solvent based zinc oxide precursor solution, product of Atotech Deutschland GmbH) at ambient temperature and removed vertically at a speed of 10 cm/min (corresponds to step (ii)). It was subsequently dried for 10 min at a temperature of 200 °C.

Step 3) The sample was then subjected to a heat ramp of 4 °C/min until the final temperature of 550 °C was reached. It was then sintered at the temperature of 550 °C for 5 min in air (corresponds to step (iii)). The thickness of the zinc oxide layer was about 5 nm.

Step 4) After cooling to ambient temperature, the sample was treated with an aqueous solution containing a treatment additive as given in Table I (corresponds to step (iv)) at 20 °C for 2 min.

Step 5) This was followed by treatment with an aqueous solution containing 200 ml/l Sigmatech™ GI Activator M (palladium based ionic activation, product of Atotech Deutschland GmbH) at 40 °C for 3 min. Then, the substrate was treated with an aqueous solution of 12 ml/l Sigmatech™ GI Reducer S (reducing agent for above palladium based ionic activation product, product of Atotech Deutschland GmbH, corresponds to step (v)). These solutions served as activation solutions.

Step 6) The sample were then fully immersed into an aqueous solution of CupraTech™ GI M (an electroless copper plating bath commercially available from Atotech Deutschland GmbH which contained copper sulphate as the copper ion source and formaldehyde as the reducing agent) at a temperature of 35 °C for 0.5 min resulting in an electroless copper layer in the coating area (corresponds to step (vi)).

The samples were then evaluated in terms of the coverage of the substrate with copper and inspected visually and the coverages were quantified as described above.

In Table I, the results of the experiments are provided. In step 2), samples were immersed once or, in some case, twice into the solution of the zinc oxide precursor, respectively. If a sample was immersed twice into said solution, it was dried as described above between the individual immersions. Those samples, which were immersed only once into the respective solution in step 2) had an average zinc oxide layer thickness after step 3) of five to seven nm and are denominated "1 application" in Table I. Those which were treated twice with step 2) are referred to as "2 applications" and had an average zinc oxide layer thickness after step 3) of 10 to 12 nm.

**Table I: Application Example 1.**

| # | Treatment additive | Concentration [µg/l] | pH¹ | Coverage of the substrate [%] | |
|---|---|---|---|---|---|
| | | | | 1 application | 2 applications |
| 1 | Synthetic example 3 | 300 | 10 | 100 | 92 |
| 2 | Synthetic example 4 | 300 | 10 | 100 | -² |
| 3 | Synthetic example 5 | 300 | 10 | 100 | 93 |
| 4 | Synthetic example 6 | 300 | 10 | 89 | -² |
| 5 | Synthetic example 7 | 300 | 10 | 95 | -² |
| 6 | Synthetic example 8 | 300 | 10 | 100 | 97 |

| | | | | | |
|---|---|---|---|---|---|
| ¹ of the treatment solution in step 4); ² not measured | | | | | |

### Application Example 2 (comparative, according to WO 2015/044091)

The method as described in Application Example 1 (with one application of EXPT VitroCoat GI S-1 in step 2) was repeated without step 4). Due to the omission of the treatment of the sample with a treatment solution (corresponding to step (iv) of the method according to the invention), only partially covered substrates were obtained. The coverage of the substrate was 20%

### Application Example 3 (comparative)

The method as described in Application Example 1 was repeated without step 4). Instead optional step (iii.i) was carried out between steps 3) and 5) of Application Example 1 and the substrate was treated with an aqueous solution having a pH of 10 (adjusted with pH-Correction solution (product of Atotech Deutschland GmbH) in said optional step. Said aqueous solution contained no other additives. Only partially covered substrates were obtained. The coverage of the substrate was 15%.

When comparing inventive Application Example 1 and comparative Application Example 2 and 3, a significant increase of the coverage of the substrates with copper was found. Due to this increased coverage of the substrates with copper after 30 s of plating in step 6), also the metal deposition initiation after 30 s was enhanced in the inventive Application Example 1.

### Application Example 4 (inventive)

The method as described in Application Example 1 was repeated (with one immersion into zinc oxide precursor solution in step 2) only). In step 4), a treatment solution containing a treatment additive TA1 which comprised units according to formula (1-1) with A¹=ethylene and both R^{a1}=H as well as R^{a1} is a crosslinking moiety (1,6-dicarbonylhexylene) between two N of formula (1-1). Herein, the ratio of units having R^{a1}=H to units having R^{a1} as a crosslinking moiety (1,6-dicarbonylhexylene) between two N of formula (1-1) is approximately 20:1. Said treatment additive TA1 was contained in the treatment solution in step 4) as given in Table II.

**Table II: Application Example 4.**

| # | Concentration [µg/l] | pH¹ | Coverage of the substrate (%) | Adhesion strength [N/cm] |
|---|---|---|---|---|
| 1 | 300 | 8 | 100 | >5 |
| 2 | 300 | 10 | 80 | >5 |
| 3 | 150 | 8 | 95 | >5 |
| 4 | 150 | 10 | 85 | >5 |

| | | | | |
|---|---|---|---|---|
| ¹ of the treatment solution in step 4) | | | | |

Again, all examples allowed for good coverages of the substrates with copper and good metal deposition initiation after 30 s. In addition, the adhesion strength was sufficient to meet current requirements of the electronic industry. At pH 8, the coverages of the substrates with copper and the metal deposition initiation after 30 s were marginally better than the values obtained at pH 10. However, the latter ones still exceeded those of comparative Application Examples 2 and 3.

The difference can also be seen from Figure 2. The metal deposition initiation after 10 s (Figure 2D), 20 s (Figure 2E) and 30 s (Figure 2F) is much better compared to the comparative counterparts in Figures 2A (10 s), 2B (20s) and 2C (30 s) obtained from Application Example 2.

### Application Example 5 (inventive)

The method as described in Application Example 1 was repeated with the following differences:
Step 2) The treated substrates were vertically immersed once into a solution of EXPT Vitrocoat GI W5 (aqueous solution of a zinc oxide precursor, product of Atotech Germany GmbH) at ambient temperature and removed vertically at a speed of 10 cm/min (corresponds to step (ii)). They were subsequently dried for 15 minutes at a temperature of 200 °C.
Step 4) After cooling to ambient temperature, the substrate was treated with an aqueous solution containing a treatment additive as given in Table III (corresponds to step (iv)) at 20 °C for 2 min.
Step 6) Substrates were then fully immersed into an aqueous solution of CupraTech™ GIM (a copper plating bath commercially available from Atotech Deutschland GmbH which contained copper sulphate as the copper ion source and formaldehyde as the reducing agent) at a temperature of 35 °C for 1 min resulting in an electroless copper layer in the coating area (substrate surface structured) only (corresponds to step (vi)). The non-coated slide sections remained unmetallised. Steps 1, 3 and 5 were used as described above.

**Table III: Application Example 5.**

| # | Treatment additive | Concentration [µg/L] | pH¹ | Coverage of the substrate [%] |
|---|---|---|---|---|
| 1 | Synthetic example 1 | 250 | 10 | 70.5 |
| 2 | Synthetic example 2 | 250 | 10 | 28.9 |
| 3 | Synthetic example 9 | 300 | 10 | 34.2 |
| 4 | As described in Application Example 4 | 300 | 10 | 85.1 |
| 5 | No additive² | | | 17.0 |

| | | | | |
|---|---|---|---|---|
| ¹ of the treatment solution in step 4); step 4) was omitted (comparative example) | | | | |

The inventive examples (entries #1 to #4) showed improved coverages of the substrates with copper and, thus, metal deposition initiation compared to comparative example given as entry #5 in Table III. Moreover, the crosslinked treatment additive TA 1 (entry #4) showed an improved coverage of the substrate with copper and metal deposition initiation even compared to the non-crosslinked treatment additive TA 1 (entry #1).

In summary, the coverage of the substrate with copper was always higher and more homogeneous in the case of the inventive examples compared to the state of the art that did not use a treatment step (iv).

Other embodiments of the present invention will be apparent to those skilled in the art from a consideration of this specification or practice of the invention disclosed herein. It is intended that the specification and examples be considered as exemplary only, with the true scope of the invention being defined by the following claims only.

## Claims

1. A method for providing a multilayer coating on a surface of a substrate comprising the following method steps
(i) providing the substrate;
(ii) depositing at least one metal oxide precursor onto the surface of the substrate;
(iii) heat-treating the surface of the substrate such that a metal oxide is formed thereon;
(iv) treating the surface of the substrate with a treatment solution comprising at least one nitrogen containing polymeric treatment additive
wherein the nitrogen containing polymeric treatment additive is a treatment additive TA1, wherein said treatment additive TA1 comprises p units independently from each other selected from the following formulae 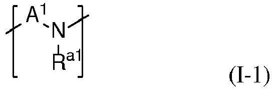 and 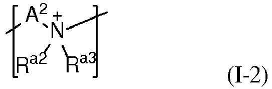
wherein each A¹ is independently from each other selected from substituted and unsubstituted C2-C4-alkylene group;
each A² is independently from each other selected from substituted and unsubstituted C2-C4-alkylene group;
each R^{a1} is independently from each other selected from the group consisting of hydrogen, alkyl group, aryl group, alkaryl group, and 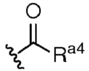 wherein each R^{a4} is independently from each other selected from the group consisting of alkyl group and aryl group or R^{a1} is a crosslinking moiety between two N of formula (1-1) or between one N of formula (1-1) and one N of formula (1-2);
each R^{a2} and R^{a3} are independently from each other selected from the group consisting of hydrogen, alkyl group, aryl group, alkaryl group or R^{a2} and/or R^{a3} are crosslinking moieties between two N of formula (1-2) or between one N of formula (1-1) and one N of formula (1-2);
p is an integer ranging from 3 to 22000;
or
the nitrogen containing polymeric treatment additive is a treatment additive TA2, wherein said treatment additive TA 2 comprises q units according to formula (II)
-[-D-E-]- (II)
wherein each D is independently from each other selected from the group consisting of
• 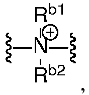
• 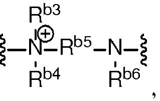
• 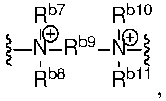 and
• substituted or unsubstituted heteroaryl groups comprising at least two nitrogen atoms;
wherein
each R^{b1}, R^{b2}, R^{b3}, R^{b4}, R^{b6}, R^{b7}, R^{b8}, R^{b10}, and R^{b11} is independently from each other selected from the group consisting of hydrogen and alkyl group;
each R^{b5} and R^{b9} is independently from each other selected from C1-C8-alkylene group;
each E is independently selected from the group consisting of
• 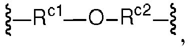
• 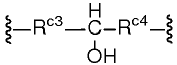 and
• 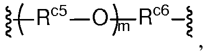
each R^{c1}, R^{c2}, R^{c3}, R^{c4} and R^{c6} is independently from each other selected from C1-C8-alkylene group;
each R^{c5} is independently from each other selected from C1-C8-alkylene group and alkarylene group;
m is an integer ranging from 2 to 100;
q is an integer ranging from 2 to 22000;
or
the nitrogen containing polymeric treatment additive is a treatment additive TA3, wherein said treatment additive TA 3 comprises r units according to formula (III)
-[-V-W-]- (III)
wherein
each V is independently from each other selected to be 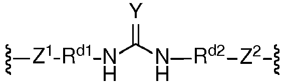 wherein
each Y is independently from each other selected from the group consisting of N-H and O;
each R^{d1} and R^{d2} is selected independently from each other from C1-C8-alkylene group;
each Z¹ and Z² is selected independently from each other from the group consisting of
▪ 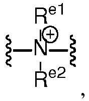
▪ substituted or unsubstituted heteroarylene groups comprising at least two nitrogen atoms, and
▪ substituted or unsubstituted heterocyclodiyl groups comprising at least two nitrogen atoms;
with each R^{e1} and R^{e2} being independently from each other selected from the group consisting of hydrogen and alkyl group;
each W is independently from each other selected from the group consisting of
• 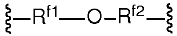
• 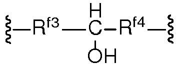 and
• 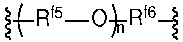 wherein
each R^{f1}, R^{f2}, R^{f3}, R^{f4} and R^{f6} is selected independently from each other from C1-C8-alkylene group;
each R^{f5} is independently from each other selected from C1-C8-alkylene group and alkarylene group;
n is an integer ranging from 2 to 100;
r is an integer ranging from 2 to 22000;
or
the treatment solution comprises as nitrogen containing polymeric treatment additive a mixture of treatment additives TA1 and TA2, TA1 and TA3, TA2 and TA3, or TA1 and TA2 and TA3;
(v) treating the surface of the substrate with an activation solution; and
(vi) treating the surface of the substrate with a metallising solution such that a metal or metal alloy is deposited thereon.

2. The method according to claim 1 **characterised in that** the treatment additive TA1 comprises at least one R^{a1}, R^{a2} and/or R^{a3} as a crosslinking moiety between two N and wherein said R^{a1}, R^{a2} and/or R^{a3} is selected from the group consisting of alkylene group, α,ω-dicarbonylalkylene group, arylene group, dicarbonylarylene group and alkarylene group.

3. The method according to claims 1 or 2 **characterised in that** each D is selected from 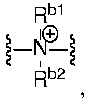 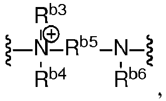 and heteroaryl groups comprising at least two nitrogen atoms; and each E is selected from 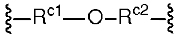 and 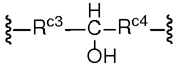 in the treatment additive TA2.

4. The method according to any of the preceding claims **characterised in that** each Z¹ and Z² is selected independently from each other from the group consisting of 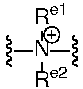 and substituted or unsubstituted heteroarylene groups comprising at least two nitrogen atoms and each W is independently from each other selected from the group consisting of 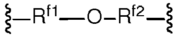 and 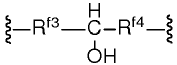 in the treatment additive TA3.

5. The method according to any of the preceding claims **characterised in that** the formed metal oxide is selected from the group consisting of zinc oxide, titanium oxide, silicon oxide, zirconium oxide, aluminium oxide, tin oxide and mixtures thereof; preferably selected from the group consisting of zinc oxide and tin oxide.

6. The method according to any of the preceding claims **characterised in that** the total concentration of treatment additives in the treatment solution in step (iv) ranges from 0.001 to 0.1 wt.-%, more preferably from 0.004 to 0.04 wt.-%.

7. The method according to any of the preceding claims **characterised in that** the pH of the treatment solution in step (iv) ranges from 5 to 13, more preferably from 6 to 12, and most preferably from 7 to 11.

8. The method according to any of the preceding claims **characterised in that** the metal or metal alloy is deposited in step (v) by making use of a electroless metallising solution of copper, copper alloy, nickel, nickel alloy, cobalt, or cobalt alloy.

## Patentansprüche

1. Ein Verfahren zur Bereitstellung einer mehrschichtigen Beschichtung auf einer Oberfläche eines Substrats, umfassend die folgenden Verfahrensschritte:
(i) Bereitstellen des Substrats;
(ii) Aufbringen wenigstens einer Metalloxid-Vorläuferverbindung auf die Oberfläche des Substrats;
(iii) Wärmebehandeln der Oberfläche des Substrats, so dass ein Metalloxid darauf gebildet wird;
(iv) Behandeln der Oberfläche des Substrats mit einer Behandlungslösung, die wenigstens ein stickstoffhaltiges polymeres Behandlungsadditiv umfasst,
wobei das stickstoffhaltige polymere Behandlungsadditiv ein Behandlungsadditiv TA1 ist, wobei das Behandlungsadditiv TA1 p Einheiten umfasst, die unabhängig voneinander ausgewählt sind aus den folgenden Formeln: 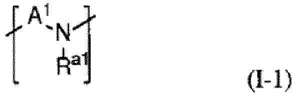 und 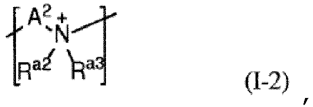
wobei jedes A¹ unabhängig von jedem anderen ausgewählt ist aus substituierter und unsubstituierter C2-C4-Alkylengruppe;
jedes A² unabhängig von jedem anderen ausgewählt ist aus substituierter und unsubstituierter C2-C4-Alkylengruppe;
jedes R^{a1} unabhängig von jedem anderen ausgewählt ist aus der Gruppe bestehend aus Wasserstoff, Alkylgruppe, Arylgruppe, Alkarylgruppe und 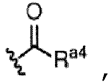 wobei jedes R^{a4} unabhängig von jedem anderen ausgewählt ist aus der Gruppe bestehend aus Alkylgruppe und Arylgruppe, oder R^{a1} eine vernetzende Einheit zwischen zwei N der Formel (I-1) oder zwischen einem N der Formel (I-1) und einem N der Formel (I-2) ist;
jedes R^{a2} und R^{a3} unabhängig von jedem anderen ausgewählt ist aus der Gruppe bestehend aus Wasserstoff, Alkylgruppe, Arylgruppe, Alkarylgruppe, oder R^{a2} und/oder R^{a3} vernetzende Einheiten zwischen zwei N der Formel (I-2) oder zwischen einem N der Formel (I-1) und einem N der Formel (I-2) sind;
p eine ganze Zahl in dem Bereich von 3 bis 22000 ist;
oder
das stickstoffhaltige polymere Behandlungsadditiv ein Behandlungsadditiv TA2 ist, wobei das Behandlungsadditiv TA2 q Einheiten gemäß Formel (II) umfasst,
-[-D-E-]- (II)
wobei jedes D unabhängig von jedem anderen ausgewählt ist aus der Gruppe bestehend aus
• 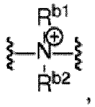
• 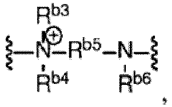
• 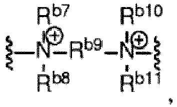 und
• substituierten oder unsubstituierten Heteroarylgruppen, die wenigstens zwei Stickstoffatome umfassen;
wobei
jedes R^{b1}, R^{b2}, R^{b3}, R^{b4}, R^{b6}, R^{b7}, R^{b8}, R^{b10} und R^{b11} unabhängig von jedem anderen ausgewählt ist aus der Gruppe bestehend aus Wasserstoff und Alkylgruppe;
jedes R^{b5} und R^{b9} unabhängig von jedem anderen ausgewählt ist aus C1-C8-Alkylengruppe;
jedes E unabhängig ausgewählt ist aus der Gruppe bestehend aus
• 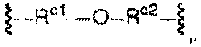
• 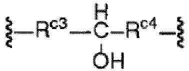
• 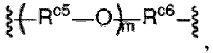 und wobei
jedes R^{c1}, R^{c2}, R^{c3}, R^{c4} und R^{c6} unabhängig von jedem anderen ausgewählt ist aus C1-C8-Alkylengruppe;
jedes R^{c5} unabhängig von jedem anderen ausgewählt ist aus C1-C8-Alkylengruppe und Alkarylengruppe;
m eine ganze Zahl in dem Bereich von 2 bis 100 ist;
q eine ganze Zahl in dem Bereich von 2 bis 22000 ist;
oder
das stickstoffhaltige polymere Behandlungsadditiv ein Behandlungsadditiv TA3 ist, wobei das Behandlungsadditiv TA3 r Einheiten gemäß Formel (III) umfasst,
-[-V-W-]- (III)
wobei
jedes V unabhängig von jedem anderen ausgewählt ist als 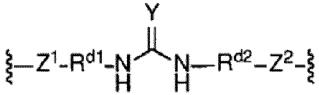 wobei
jedes Y unabhängig von jedem anderen ausgewählt ist aus der Gruppe bestehend aus N-H und 0;
jedes R^{d1} und R^{d2} unabhängig von jedem anderen ausgewählt ist aus C1-C8-Alkylengruppe;
jedes Z¹ und Z² unabhängig von jedem anderen ausgewählt ist aus der Gruppe bestehend aus
▪ 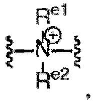
▪ substituierten oder unsubstituierten Heteroarylengruppen, die wenigstens zwei Stickstoffatome umfassen, und
▪ substituierten oder unsubstituierten Heterocyclodiylgruppen, die wenigstens zwei Stickstoffatome umfassen, und
wobei jedes R^{e1} und R^{e2} unabhängig von jedem anderen ausgewählt ist aus der Gruppe bestehend aus Wasserstoff und Alkylgruppe;
jedes W unabhängig von jedem anderen ausgewählt ist aus der Gruppe bestehend aus
• 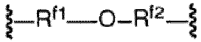
• 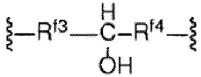
• 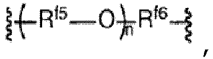 und wobei
jedes R^{f1}, R^{f2}, R^{f3}, R^{f4} und R^{f6} unabhängig von jedem anderen ausgewählt ist aus C1-C8-Alkylengruppe;
jedes R^{f5} unabhängig von jedem anderen ausgewählt ist aus C1-C8-Alkylengruppe und Alkarylengruppe;
n eine ganze Zahl in dem Bereich von 2 bis 100 ist;
r eine ganze Zahl in dem Bereich von 2 bis 22000 ist;
oder
die Behandlungslösung umfasst als stickstoffhaltiges polymeres Behandlungsadditiv ein Gemisch der Behandlungsadditive TA1 und TA2, TA1 und TA3, TA2 und TA3 oder TA1 und TA2 und TA3;
(v) Behandeln der Oberfläche des Substrats mit einer Aktivierungslösung; und
(vi) Behandeln der Oberfläche des Substrats mit einer Metallisierungslösung,
so dass ein Metall oder eine Metalllegierung darauf abgeschieden wird.

2. Das Verfahren gemäß Anspruch 1, **dadurch gekennzeichnet, dass** das Behandlungsadditiv TA1 wenigstens ein R^{a1}, R^{a2} und/oder R^{a3} als vernetzende Einheit zwischen zwei N umfasst und wobei das R^{a1}, R^{a2} und/oder R^{a3} ausgewählt ist aus der Gruppe bestehend aus Alkylengruppe, α,ω-Dicarbonylalkylengruppe, Arylengruppe, Dicarbonylarylengruppe und Alkarylengruppe.

3. Das Verfahren gemäß Ansprüchen 1 oder 2, **dadurch gekennzeichnet, dass** bei dem Behandlungsadditiv TA2 jedes D ausgewählt ist aus 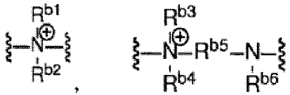 und Heteroarylgruppen, die wenigstens zwei Stickstoffatome umfassen; und jedes E ausgewählt ist aus 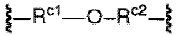 und

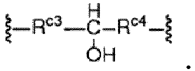

4. Das Verfahren gemäß einem der vorstehenden Ansprüche, **dadurch gekennzeichnet, dass** bei dem Behandlungsadditiv TA3 jedes Z¹ und Z² unabhängig von jedem anderen ausgewählt ist aus der Gruppe bestehend aus 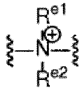 und substituierten und unsubstituierten Heteroarylengruppen, die wenigstens zwei Stickstoffatome umfassen, und jedes W unabhängig von jedem anderen ausgewählt ist aus der Gruppe bestehend aus 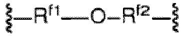 und

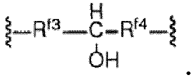

5. Das Verfahren gemäß einem der vorstehenden Ansprüche, **dadurch gekennzeichnet, dass** das gebildete Metalloxid ausgewählt ist aus der Gruppe bestehend aus Zinkoxid, Titanoxid, Siliciumoxid, Zirkoniumoxid, Aluminiumoxid, Zinnoxid und Gemischen davon; vorzugsweise ausgewählt aus der Gruppe bestehend aus Zinkoxid und Zinnoxid.

6. Das Verfahren gemäß einem der vorstehenden Ansprüche, **dadurch gekennzeichnet, dass** die Gesamtkonzentration an Behandlungsadditiven in der Behandlungslösung in Schritt (iv) in dem Bereich von 0,001 bis 0,1 Gew.-%, bevorzugter von 0,004 bis 0,04 Gew.-%, liegt.

7. Das Verfahren gemäß einem der vorstehenden Ansprüche, **dadurch gekennzeichnet, dass** der pH-Wert der Behandlungslösung in Schritt (iv) in dem Bereich von 5 bis 13, bevorzugter von 6 bis 12 und höchst bevorzugt von 7 bis 11, liegt.

8. Das Verfahren gemäß einem der vorstehenden Ansprüche, **dadurch gekennzeichnet, dass** das Metall oder die Metalllegierung in Schritt (v) unter Verwendung einer stromlosen Metallisierungslösung von Kupfer, Kupferlegierung, Nickel, Nickellegierung, Cobalt oder Cobaltlegierung abgeschieden wird.

## Revendications

1. Procédé pour disposer un revêtement multicouche sur une surface d'un substrat comprenant les étapes de procédé suivantes
(i) fourniture du substrat ;
(ii) dépôt d'au moins un précurseur d'oxyde métallique sur la surface du substrat ;
(iii) traitement thermique de la surface du substrat de sorte qu'un oxyde métallique soit formé sur celui-ci ;
(iv) traitement de la surface du substrat avec une solution de traitement comprenant au moins un additif de traitement polymère contenant de l'azote
dans lequel l'additif de traitement polymère contenant de l'azote est un additif de traitement TA1, ledit additif de traitement TA1 comprenant p motifs, indépendamment les uns des autres, choisis parmi les formules suivantes 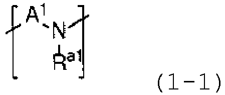 et 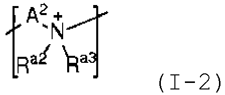
dans lesquelles chaque A¹ est, indépendamment des autres, choisi parmi un groupe alkylène en C2-C4 substitué et non substitué ;
chaque A² est, indépendamment des autres, choisi parmi un groupe alkylène en C2-C4 substitué et non substitué ;
chaque R^{a1} est, indépendamment des autres, choisi dans le groupe constitué d'hydrogène, un groupe alkyle, un groupe aryle, un groupe alkaryle, et 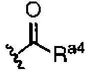 dans lequel chaque R^{a4} est, indépendamment des autres, choisi dans le groupe constitué d'un groupe alkyle et un groupe aryle ou R^{a1} est un fragment de réticulation entre deux N de formule (I-1) ou entre un N de formule (1-1) et un N de formule (1-2) ;
chaque R^{a2} et R^{a3} est, indépendamment les uns des autres, choisi dans le groupe constitué d'hydrogène, un groupe alkyle, un groupe aryle, un groupe alkaryle ou R^{a2} et/ou R^{a3} sont des fragments de réticulation entre deux N de formule (I-2) ou entre un N de formule (I-1) et un N de formule (I-2) ;
p est un entier dans la plage de 3 à 22000 ;
ou
l'additif de traitement polymère contenant de l'azote est un additif de traitement TA2, ledit additif de traitement TA2 comprenant q motifs selon la formule (II)
-[-D-E-]- (II)
dans lequel chaque D est, indépendamment des autres, choisi dans le groupe constitué de
• 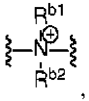
• 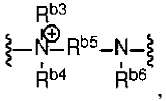
• 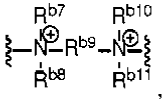 et
• des groupes hétéroaryle substitués ou non substitués comprenant au moins deux atomes d'azote ;
dans lequel
chaque R^{b1}, R^{b2}, R^{b3}, R^{b4}, R^{b6}, R^{b7}, R^{b8}, R^{b10} et R^{b11} est, indépendamment des autres, choisi dans le groupe constitué d'hydrogène et un groupe alkyle ;
chaque R^{b5} et R^{b9} est, indépendamment des autres, choisi parmi un groupe alkylène en C1-C8 ;
chaque E est indépendamment choisi dans le groupe constitué de
• 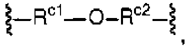
• 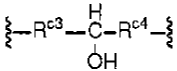
• 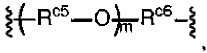 et
chaque R^{c1}, R^{c2}, R^{c3}, R^{c4} et R^{c6} est, indépendamment des autres, choisi parmi un groupe alkylène en C1-C8 ;
chaque R^{c5} est, indépendamment des autres, choisi parmi un groupe alkylène en C1-C8 et un groupe alkarylène;
m est un entier dans la plage de 2 à 100 ;
q est un entier dans la plage de 2 à 22000 ;
ou
l'additif de traitement polymère contenant de l'azote est un additif de traitement TA3, ledit additif de traitement TA3 comprenant r motifs selon la formule (III)
-[-V-W-]- (III)
dans laquelle
chaque V est, indépendamment des autres, choisi de façon à être 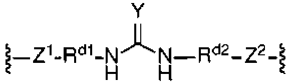 dans lequel
chaque Y est, indépendamment des autres, choisi dans le groupe constitué de N-H et 0 ;
chaque R^{d1} et R^{d2} est choisi, indépendamment les uns des autres, parmi un groupe alkylène en C1-C8 ;
chaque Z¹ et Z² est choisi, indépendamment les uns des autres, dans le groupe constitué de
• 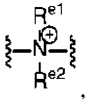
• des groupes hétéroarylène substitués ou non substitués comprenant au moins deux atomes d'azote, et
• des groupes hétérocyclodiyle substitués ou non substitués comprenant au moins deux atomes d'azote ;
avec chaque R^{e1} et R^{e2} étant, indépendamment les uns des autres, choisi dans le groupe constitué d'hydrogène et un groupe alkyle ;
chaque W est, indépendamment des autres, choisi dans le groupe constitué de
• 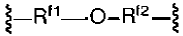
• 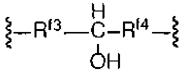
• 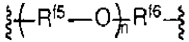 et dans lequel
chaque R^{f1}, R^{f2}, R^{f3}, R^{f4} et R^{f6} est choisi, indépendamment les uns des autres, parmi un groupe alkylène en C1-C8 ;
chaque R^{f5} est, indépendamment des autres, choisi parmi un groupe alkylène en C1-C8 et un groupe alkarylène ;
n est un entier dans la plage de 2 à 100 ;
r est un entier dans la plage de 2 à 22000 ;
ou
la solution de traitement comprend, en tant qu'additif de traitement polymère contenant de l'azote, un mélange d'additifs de traitement TA1 et TA2, TA1 et TA3, TA2 et TA3, ou TA1 et TA2 et TA3 ;
(v) traitement de la surface du substrat avec une solution d'activation ; et
(vi) traitement de la surface du substrat avec une solution de métallisation de sorte qu'un métal ou un alliage métallique soit déposé sur celle-ci.

2. Procédé selon la revendication 1, **caractérisé en ce que** l'additif de traitement TA1 comprend au moins un R^{a1}, R^{a2} et/ou R^{a3} en tant que fragment de réticulation entre deux N et dans lequel ledit R^{a1}, R^{a2} et/ou R^{a3} est choisi dans le groupe constitué d'un groupe alkylène, un groupe α,ω-dicarbonylalkylène, un groupe arylène, un groupe dicarbonylarylène et un groupe alkarylène.

3. Procédé selon les revendications 1 ou 2, **caractérisé en ce que** chaque D est choisi parmi 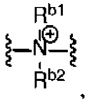 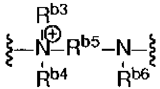 et des groupes hétéroaryle comprenant au moins deux atomes d'azote ; et chaque E est choisi parmi 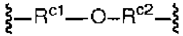 et 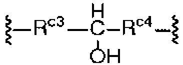 dans l'additif de traitement TA2.

4. Procédé selon l'une quelconque des revendications précédentes **caractérisé en ce que** chaque Z¹ et Z² est choisi, indépendamment les uns des autres, dans le groupe constitué de 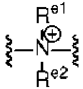 et des groupes hétéroarylène substitués ou non substitués comprenant au moins deux atomes d'azote et chaque W est, indépendamment des autres, choisi dans le groupe constitué de 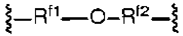 et 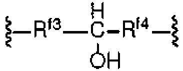 dans l'additif de traitement TA3.

5. Procédé selon l'une quelconque des revendications précédentes, **caractérisé en ce que** l'oxyde métallique formé est choisi dans le groupe constitué de l'oxyde de zinc, l'oxyde de titane, l'oxyde de silicium, l'oxyde de zirconium, l'oxyde d'aluminium, l'oxyde d'étain et des mélanges de ceux-ci ; de préférence choisi dans le groupe constitué de l'oxyde de zinc et l'oxyde d'étain.

6. Procédé selon l'une quelconque des revendications précédentes, **caractérisé en ce que** la concentration totale d'additifs de traitement dans la solution de traitement dans l'étape (iv) est dans la plage de 0,001 à 0,1 % en poids, plus préférablement de 0,004 à 0,04 % en poids.

7. Procédé selon l'une quelconque des revendications précédentes, **caractérisé en ce que** le pH de la solution de traitement dans l'étape (iv) est dans la plage de 5 à 13, plus préférablement de 6 à 12, et de manière préférée entre toutes de 7 à 11.

8. Procédé selon l'une quelconque des revendications précédentes **caractérisé en ce que** le métal ou alliage métallique est déposé dans l'étape (v) au moyen de l'utilisation d'une solution de métallisation autocatalytique de cuivre, d'alliage de cuivre, de nickel, d'alliage de nickel, de cobalt ou d'alliage de cobalt.
